# EUROPEAN PATENT SPECIFICATION

(11) **EP 3 029 595 B1**
(45) Date of publication and mention of the grant of the patent: **06.04.2022**
(21) Application number: 15198039.8
(22) Date of filing: 04.12.2015
(51) Int. Cl.: G06F 21/56

(54) **APPARATUSES, MOBILE DEVICES, METHODS AND COMPUTER PROGRAMS FOR EVALUATING RUNTIME INFORMATION OF AN EXTRACTED SET OF INSTRUCTIONS BASED ON AT LEAST A PART OF A COMPUTER PROGRAM**
VORRICHTUNGEN, MOBILE GERÄTE UND COMPUTERPROGRAMM ZUR BEURTEILUNG VON LAUFZEITINFORMATION EINES AUSGEWÄHLTEN SATZES VON ANWEISUNGEN BASIEREND AUF ZUMINDEST EINEM TEIL EINES COMPUTERPROGRAMMS
APPAREILS, DISPOSITIFS MOBILES, PROCÉDÉS ET PROGRAMMES D'ORDINATEUR POUR L'ÉVALUATION D'INFORMATIONS SUR L'EXÉCUTION D'UN ENSEMBLE D'INSTRUCTIONS EXTRAITES BASÉE SUR AU MOINS UNE PARTIE D'UN PROGRAMME D'ORDINATEUR

(30) Priority: 05.12.2014 DE 102014118034
(43) Date of publication of application: 08.06.2016
(73) Proprietor: Fraunhofer-Gesellschaft zur Förderung der angewandten Forschung e.V., 80686 München (DE); Technische Universität Darmstadt, 64289 Darmstadt (DE)
(72) Inventor: Rasthofer, Siegfried, 64287 Darmstadt (DE); Miltenberger, Marc, 65795 Hattersheim (DE); Bodden, Eric, 64289 Darmstadt (DE)
(74) Representative: 2SPL Patentanwälte PartG mbB

(56) References cited:
- US-A1- 2013 117 855
- KEVIN A ROUNDY ET AL: "Hybrid Analysis and Control of Malware", 15 September 2010 (2010-09-15), RECENT ADVANCES IN INTRUSION DETECTION, SPRINGER BERLIN HEIDELBERG, BERLIN, HEIDELBERG, PAGE(S) 317 - 338, XP019150454, ISBN: 978-3-642-15511-6 * Sections 1, 3-5. *
- QI XI ET AL: "An API deobfuscation method combining dynamic and static techniques", PROCEEDINGS 2013 INTERNATIONAL CONFERENCE ON MECHATRONIC SCIENCES, ELECTRIC ENGINEERING AND COMPUTER (MEC), IEEE, 20 December 2013 (2013-12-20), pages 2133-2138, XP032634095, DOI: 10.1109/MEC.2013.6885402 ISBN: 978-1-4799-2564-3 [retrieved on 2014-08-27]

## Description

### Technical Field

Embodiments relate to apparatuses, mobile devices, methods and computer programs for evaluating runtime information of an extracted set of instructions based on at least a part of a computer program, more particularly, but not exclusively, based on one or more logging points.

### Background

This section introduces aspects that may be helpful in facilitating a better understanding of the invention(s). Accordingly, the statements of this section are to be read in this light and are not to be understood as admissions about what is in the prior art or what is not in the prior art.

It is often a challenging task to tell apart malware from benign applications: obfuscation and string encryption often render static analyses ineffective. As such techniques may often be provided as part of a development environment, or as easy-to-use plugin solution, more and more developers may use such techniques, to protect themselves from intellectual property theft or to secure their applications.

Applications written for virtual execution environments, such as the Java Virtual Machine (JVM), or the Dalvik Virtual Machine (DVM) of the Android mobile operating system, may often be provided as bytecode, which comprises instructions for the virtual execution environment. As bytecode may often be destined for well-known and well-documented virtual environments, efforts to re-translate the bytecode into (analyzable) program code have advanced greatly. As a result, application developers, especially for the Android mobile operating system, which, in many cases, uses the Dalvik Virtual Machine, may often take additional steps, such as obfuscation, to protect their applications.

Two major approaches to obfuscation are reflection and string encryption. In reflection, calls to external subroutines might not be performed directly, and might not explicitly be contained in the program code. Instead, such subroutines may be called by name, with the name being provided by a function. Such functions may often comprise string encryption: They may serve as an intermediary, providing decrypted values, such as external subroutine names, phone numbers, internet addresses, or access codes for control servers, for previously specified parameters. At runtime, such functions may be called to provide the necessary information, while often shielding the information towards static analysis.

Documents KEVIN A ROUNDY ET AL: "Hybrid Analysis and Control of Malware", QI XI ET AL: "An API deobfuscation method combining dynamic and static techniques" and US 2013/117855 A1 disclose methods for code analysis and de-obfuscation.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

The invention is defined only by the scope of the appended claims.

Embodiments provide an apparatus as defined in independent claim 1.

In some embodiments, the apparatus might further comprise an extraction module to provide the information related to the extracted set of instructions, based on information related to an original set of program instructions, and the information related to the one or more logging points. Such an extraction module might be tailored to the requirements of the evaluation module. It may also provide the extracted set of instructions for further analysis in external applications.

In at least some embodiments, the extraction module may be configured to provide the information related to the extracted set of instructions, based on the information related to the original set of program instructions. The extraction module may be configured to determine at least one instruction in the original set of program instructions accessing one or more runtime values, and the one or more runtime values may be based on the information related to the one or more logging points. The extraction module may be further configured to extract the extracted set of instructions from the original set of program instructions relating to the accessing of the one or more runtime values. Extracting instructions accessing one or more runtime values may improve code coverage, as branching instructions might be omitted in some embodiments, which may avoid time bombs and logic bombs. In embodiments, time bombs may correspond to branching instructions that depend on a time or date, and logic bombs may correspond to branching instructions that depend on an environmental trigger, such as a presence of a debugging environment, or command instructions from a command server.

In some embodiments, the original set of program instructions may comprise one or more execution sequences, and the information related to the extracted set of instructions may comprise differing execution sequences based on the one or more execution sequences of the original set of program instructions. The extracted set of instructions may be based on subsets of the one or more execution sequences. Using differing execution sequences, which may differ based on branching instructions, may, in embodiments, improve code coverage and avoid time bombs and logic bombs.

In some embodiments, the extracted set of instructions may comprise instructions to calculate and/or access one or more data values and/or runtime information related to at least one of the one or more logging points. Limiting the scope to runtime information related to the one or more logging points may decrease the scope and complexity of the evaluation.

In some embodiments, the extraction module may be configured to provide the information related to the extracted set of instructions based on program slices for the original set of program instructions, wherein the instructions comprised in the extracted set of instructions manipulate and/or access at least one data value related to the one or more logging points. Limiting the scope to runtime information related to the one or more logging points may decrease the scope and complexity of the evaluation.

In some embodiments, the original set of program instructions may comprise obfuscated instructions and/or obfuscated data values. In some embodiments, the runtime information may be used to de-obfuscate the instructions and/or data values.

In various embodiment, the evaluation module may be further configured to complete the execution of a set of instructions in case an execution exception occurs. As, in embodiments, the subsets may be determined based on branching instructions, which might lead to subsets that might never be executed in the application, continuing the execution with a next subset may allow the evaluation module to determine a large part of the information without the need for user input.

In various embodiments, the evaluation module may be further configured to reuse information related to intermediate results of the execution of a subset of instructions of the extracted set of instructions comprising the same instructions in the subset of instructions of the extracted set of instructions. Reusing such information related to intermediate results may decrease the computational effort.

In various embodiment, the runtime information may correspond to information related to instructions, parameters and/or variables comprised in the original set of program instructions and related to the one or more logging points, wherein the instructions, parameters, variables, and/or return values of the instructions of the original set are replaced with runtime instructions, runtime parameters, runtime variables and/or runtime return values comprised in the runtime information. Such runtime information may be used to further analyze the computer program, and to de-obfuscated at least parts of the computer program.

In some embodiments, the original set of program instructions may be based on a program code or a bytecode for a virtual machine. In various embodiments the original set of program instructions may also be based on a software application bundle, an Android Application Package (APK), a Java Archive (JAR), or an iOS application. As computer programs for mobile operating systems, which may have access to sensitive information or functionality, are released in large amounts, embodiments may provide a way to speed up the recognition of malware within such programs.

In some embodiments, the apparatus may further comprise an integration module to provide information related to an evaluated set of instructions, based on the original set of program instructions and the runtime information. Such an evaluated set of instructions might be used for further analysis in external applications.

In some embodiments, the integration module might be configured to resolve reflection calls to direct calls, resolve variables, resolve parameters, annotate intents, and/or resolve obfuscation transformations for the evaluated set of instructions, based on the runtime information. Integrating such runtime information in the evaluated set of instructions may facilitate further analyses of the computer program.

In some embodiments, the evaluation module might be further configured to provide information related to one or more program slices of the original set of program instructions, based on the information related to the extracted set of instructions. Such program slices might be used for further analysis in external applications.

A non-limiting example describes an apparatus for providing information related to runtime information, based on information related to an extracted set of instructions and information related to one or more logging points. The apparatus comprises an input to obtain the information related to the extracted set of instructions and the information related to the one or more logging points. The apparatus further comprises a computation module to determine the information related to the runtime information, based on the information related to the extracted set of instructions and the information related to the one or more logging points and an output to provide the information related to the runtime information. In embodiments, such an apparatus, which might be comprised in a mobile device or a simulation environment, may provide the evaluation of the extracted set of instructions for an evaluation module, in a native runtime environment.

A non-limiting example describes a mobile device comprising the apparatus for providing information related to runtime information, based on information related to an extracted set of instructions and information related to one or more logging points. In embodiment, a mobile device may provide a native execution environment for the instructions comprised in the extracted set of instructions.

In some embodiments, the evaluation module might further comprise an output to provide the information related to the extracted set of instructions and the information related to the one or more logging points to an apparatus for providing information related to runtime information, based on information related to an extracted set of instructions and information related to one or more logging points. The evaluation module might further comprise an input to obtain information related to runtime information from the apparatus for providing information related to runtime information, based on information related to an extracted set of instructions and information related to one or more logging points. The evaluation module might be further configured to provide the runtime information, based on the information related to runtime information. In embodiments, an apparatus for providing information related to runtime information, based on information related to an extracted set of instructions and information related to one or more logging points, which might be comprised in a mobile device or a simulation environment, may provide the evaluation of the extracted set of instructions for an evaluation module, in a native runtime environment.

A non-limiting example describes an apparatus for providing information related to code properties, based on an original set of program instructions. The apparatus comprises an output to provide the information related to the original set of program instructions for an apparatus for evaluating runtime information of an extracted set of instructions based on at least a part of a computer program. The apparatus further comprises an input to obtain runtime information from the apparatus for evaluating runtime information of an extracted set of instructions based on at least a part of a computer program. The apparatus further comprises an evaluation module to provide the information related to code properties, based on the runtime information. In embodiments, the apparatus might be used to provide an automatic assessment of risks and/or functionalities of the original set of program instructions.

A non-limiting example describes a mobile device comprising the apparatus for providing information related to code properties, based on an original set of program instructions. In embodiments, the apparatus might be used by users of the mobile device to assess the risks of using a previously untested computer program comprising the original set of program instructions.

Embodiments further provide a method as defined in independent claim 12.

A non-limiting example describes a method for providing information related to runtime information, based on information related to an extracted set of instructions and information related to one or more logging points. The method comprises obtaining the information related to the extracted set of instructions and the information related to the one or more logging points. The method further comprises determining the information related to the runtime information, based on the information related to the extracted set of instructions and the information related to the one or more logging points and providing the information related to the runtime information.

A non-limiting example describes a method for providing information related to code properties, based on an original set of program instructions. The method comprises providing the information related to the original set of program instructions for an apparatus for evaluating runtime information of an extracted set of instructions based on at least a part of a computer program. The method further comprises obtaining runtime information from the apparatus for evaluating runtime information of an extracted set of instructions based on at least a part of a computer program and providing the information related to code properties, based on the runtime information.

Embodiments further provide a computer program having a program code for performing at least one of the above methods, when the computer program is executed on a computer, a processor, or a programmable hardware component. A further non-limiting example is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of an apparatus for evaluating runtime information of an extracted set of instructions based on at least a part of a computer program;
Fig. 2 illustrates a block diagram of an embodiment of an apparatus for evaluating runtime information of an extracted set of instructions based on at least a part of a computer program and an apparatus for providing information related to runtime information, based on information related to an extracted set of instructions and information related to one or more logging points;
Fig. 3 illustrates a block diagram of an embodiment of a mobile device comprising an apparatus for providing information related to runtime information, based on information related to an extracted set of instructions and information related to one or more logging points;
Fig. 4 shows a code fragment of an obfuscated program code;
Fig. 5 illustrates a block diagram of a general structure of an embodiment;
Fig. 6 illustrates a control flow graph of a code sample;
Fig. 6a illustrates code samples illustrating optimizations performed by an extraction module of an embodiment;
Fig. 6b illustrates code samples illustrating branching instructions handled by an extraction module of an embodiment;
Fig. 7 shows a pseudo code fragment of an initialization and basic structure of an embodiment;
Fig. 8 shows a pseudo code fragment of a backward slicing algorithm of an embodiment;
Fig. 9 shows a pseudo code fragment of a callee slicing algorithm of an embodiment;
Fig. 10 shows a pseudo code fragment of a caller slicing algorithm of an embodiment;
Fig. 11 shows a code fragment from the Pincer malware family;
Fig. 12 illustrates code samples illustrating branching instructions handled by an extraction module of an embodiment;
Fig. 13 illustrates a code sample illustrating branching instructions handled by an extraction module of an embodiment;
Fig. 14 illustrates a code sample illustrating a simplified example of a reflective method call;
Fig. 15 illustrates a block diagram of an embodiment of an apparatus for providing information related to code properties, based on an original set of program instructions;
Fig. 16 illustrates a block diagram of an embodiment of a mobile device comprising an apparatus for providing information related to code properties, based on an original set of program instructions;
Fig. 17 illustrates a flow chart of an embodiment of a method for evaluating runtime information of an extracted set of instructions based on at least a part of a computer program;
Fig. 18 illustrates a flow chart of an embodiment of a method for providing information related to runtime information, based on information related to an extracted set of instructions and information related to one or more logging points; and
Fig. 19 illustrates a flow chart of an embodiment of a method for providing information related to code properties, based on an original set of program instructions.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all alternatives falling within the scope of the claims.

Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Smartphones have become a popular and worthwhile target for attacks. Malicious applications may send scamming text messages to premium-rate telephone numbers, steal the user's data, or integrate the phone into botnets. Automatically identifying such sophisticated malware applications among millions of available applications may be considered a challenging undertaking: Code obfuscation and string encryption may often render static analyses ineffective. Dynamic analyses, on the other hand, may require user inputs and may be frequently tricked by malware that detects the execution environment emulated by the analysis tool and then refrains from malicious behavior.

Android is often considered to have become the most popular smartphone operating system with a dominant share of installations worldwide. It is often considered that one reason for the success of the platform is the availability of applications for almost every need: While this abundance of applications is very convenient for the user, it may make assessing applications much harder since the trustworthiness and competence of the developer may be hard to judge, as may be the quality of the application itself.

To assess the quality or security of an Android application, experts may be interested in its runtime values. This knowledge may be considered important in many aspects. The analyst may want to know, among other things, which Uniform Resource Locators (URLs) data is transmitted to, which phone numbers SMS messages are sent to, what the contents of these messages are, and which databases are read from the phone (contacts, e-mail, SMS messages, etc.). If an application, for instance, opens http instead of https connections, this might hint at a security flaw. If SMS messages are sent to well-known premium-rate scamming numbers, this may indicate malware. However, even if applications might not be outright malicious, many of them may be obfuscated to protect their respective author's intellectual property, effectively hindering manual inspection. The app's bytecode may often only contain encrypted byte sequences instead of ready-to-read strings. The analyst might then manually investigate how the string obfuscation was done in this particular application and reconstruct every such string.

Obfuscation may also pose challenges for automated static-analysis tools. In modern Android malware, methods might often not be called directly but through reflection, with the target method's name being stored in an encrypted format. A reflection call may correspond to specifying the name of a function to be called as a string, which may be computed or obtained from a separate function. The actual call-target string might be computed not before runtime, which may make it unavailable to classic static-analysis tools. Without this information, however, these tools might not build precise and complete call graphs, thereby losing information about which methods are called where, effectively hindering malware detection. Inter-component or inter-application analyses may face similar challenges. In Android, inter-application and inter-component communication may most of the time be performed using so-called intents where the target can be specified as a string. If this string is obfuscated, the recipient of the intent might no longer be determined statically. The availability of powerful obfuscation tools may aggravate the issue as they might help spreading such obfuscation techniques.

Though all required values may be known at runtime, dynamic analysis techniques may also face several challenges when analyzing real-world malware samples. Some approaches, for instance, may rely on intercepting malicious network traffic through man-in-the-middle proxies or parse the output of a logging system. This however might only work if the code paths that produce the respective network traffic or logging outputs are actually executed at runtime, but neither the tool nor the analyst might know how long the application needs to be run to explore all paths. Furthermore, the code may behave differently depending on the environment (emulator vs. real phone, different phone models, etc.) in which it is executed. Malicious applications may nowadays use time bombs, which cause the malware to be executed only at a certain time or date or logic bombs which activate the malware based on some environmental trigger. This also includes bot-net malware that might only act in response to a command received from a command-and-control server. Equally important, Android applications may be considered interactive and certain user interactions may be required to trigger a specific behavior. Dynamic tools might need to simulate these interactions as information might only be gathered about code paths that are actually executed. Consequently, many runtime values of interest might remain unknown.

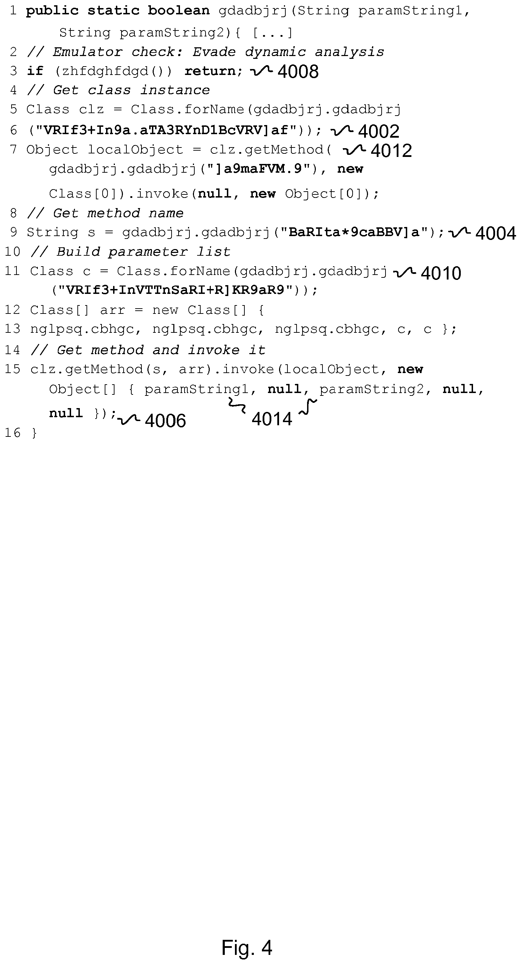

Fig. 4 shows a real-world code snippet taken from Fakelnstaller, which might be considered one of the most widespread malware families. The sample has been decompiled to Java source code and code comments have been added to ease the understanding. FakeInstaller may heavily rely on obfuscation to hide its behavior from both analysis tools and manual investigators. The obfuscator may generate random class and method names, eliminating most semantic information. Furthermore, at runtime, instead of calling methods directly, FakeInstaller may take a string previously encrypted and decrypt it using a lookup table. It might then use reflection to find the class and method that bear the decrypted name and finally invoke the retrieved method.

For instance, the string constant VRIf3+In9a.aTA3RYnD1BcVRV]af 4002 in line 6 may be decrypted to the name of the android.telephony.SmsManager operating-system class which may then be loaded using reflection. SMSManager might be considered a sensitive resource: malware might use it to send expensive premium-rate SMS messages at the cost of the user. Indeed, the string BaRIta^{∗}9caBBV]a 4004 in line 9 may be decrypted to sendTextMessage, the name of the method for sending text messages, which is also located using reflection. Line 15 4006 may finally invoke the method, actually sending out the text message. With the help of these runtime values it was just discovered that the method gdadbjrj is responsible for sending text messages where paramString1 is the number and paramString2 is the body of the message.

Many current malware applications may be obfuscated in a similar way, either manually or by using commercial tools such as DexGuard. A human analyst might then carefully inspect the decompiled bytecode, find the lookup table, and manually decrypt all strings to detect the behavior described above. Strings decrypted once might not usually be reused, as different malware variants may use different lookup tables.

Many static-analysis tools might not be able to find the call to sendTextMessage at all because they might not interpret string operations nor the reflection Application Programming Interface (API), and might thus lack the corresponding call-graph edge. And even those static-analysis tools that do model these APIs might be fooled by attackers who encode the strings using native-code libraries and the static analysis fails to model.

But the code in the example may challenge dynamic-analysis approaches just as well. First, they may try to find an execution path actually triggering the gdadbjrj method. If, for instance, method gdadbjrj is only executed after a delay (time bomb) or after a specific environment trigger (logic bomb), this might not be a trivial undertaking. In such situations, the analysis might never know when it is safe to stop the dynamic test execution and might not easily speed up analysis either. Other malware might call the malicious code only when the user clicks on a certain button. Then, the analysis tool might emulate this button click and all user actions required to reach the user-interface state displaying the button in the first place.

Various obfuscation techniques for dynamic approaches, such as emulator-detection mechanisms may complicate this analysis even further. The check in line 3 4008, for instance, may prevent the malicious code from being executed if the execution environment shows characteristics of an emulator such as the presence of certain files or a specific timing behavior. It might also abort if a debugger is attached to the application. Dynamic analysis environments might never fully hide all of these characteristics and thus fail on sophisticated malware.

Embodiments might fully automatically retrieve all relevant runtime values of the example in Fig. 4. A security analyst might simply specify the variables and/or logging points for which runtime values should be retrieved. In a first step, knowing nothing else about the app, in this example the analyst might likely choose the first parameters to the forName 4002, 4010 (line 11) and getMethod 4006, 4012 calls and the two variables paramString1 and paramString2 4014 (line 14) to learn more about the reflective calls. An extraction module may then automatically extract all code computing those values, while crucially, however, discarding certain conditional control-flow constructs that do not impact the computed value. In the example, this might discard the emulator-detection check at line 3, and also outside of gdadbjrj will only retain exactly the code that computes the input values paramString1 and paramString2 4014.

An evaluation module might then run only the reduced code. Since emulator-detection checks may be eliminated, the dynamic analysis might immediately execute all those parts of gdadbjrj relevant to the computation of the selected values. At runtime, the analysis may discover the name SmsManager.sendTextMessage of the method called through reflection. Lastly, it may report the concrete telephone numbers (7151, 2858 and 9151) and bodies (701369431072588745752, 7012394196732588741192 and 7834194455582588771822) of the SMS messages sent.

Embodiments might not require any manipulations to the underlying Android framework. They may work purely on the bytecode level of the target application, through a bytecode-to-bytecode transformation. To aid further static analysis of the app's code, embodiments may also manifest the concrete targets of reflective calls into the original applications, as direct method calls. This may enable further analysis using existing off-the-shelf static-analysis tools such as static taint analyses. As embodiments may remove unnecessary runtime checks (e.g., emulator detection) from the original application may allow security analysts to apply dynamic-analysis tools such as TaintDroid, which the original application might have recognized and fooled, to the converted application.

Embodiments may provide a novel hybrid approach that may overcome both the limitations of purely static and purely dynamic analyses. Embodiments may work directly at the bytecode level and might not require any source code of the application under analysis. Embodiments may be hybrid: they may first statically isolate all program code that contributes to the computation of a value of interest; all other bytecode instructions that do not influence this value through data dependencies might be dismissed. The remaining code may be able to compute the same values as the original one, but might only contain the absolutely necessary instructions. Such static code isolation may eliminate control-flow checks that would otherwise hinder dynamic execution such as emulator-detection mechanisms. Even time bombs or logic bombs might be circumvented in embodiments. Such checks might only influence the control flow, but not the actual value computation, and thus get removed. Removing control-flow dependencies might not adversely affect extracting string computations from current malware.

Crucially, though, the static slicing algorithm of embodiments may differ in some respect from known algorithms as proposed by Weiser and others. Their definitions may be sound based on a fixed environment for code execution. Embodiments may deviate from this soundness concept by generating parametric slices that emulate the behavior of the original program in different environments, in particular on actual devices opposed to emulators. Using conventional slicing would require a precise model of each of these environments which might be impractical for real-world Android systems, for instance because every smartphone has a different number, different accounts, different contacts, etc. Embodiments might thus instead simulate not the environment values, but the reactions to different environments the target app implements. If an app, for instance, changes its behavior based on a command from a command-and-control server in a botnet, embodiments may create a parametric slice that may allow each of these behaviors to be triggered explicitly without having to model the botnet communication as such.

In a second step, embodiments may dynamically execute the program slices on an unmodified Android emulator or stock Android phone that may allow the reconstruction of the (potentially encrypted) values of interest. In embodiments, the reporting mechanism for the values of interest may be instrumented into the slices, so no changes to the runtime environment (emulator, Android firmware, etc.) might be necessary. Embodiments may explicitly trigger the different behaviors of the parametric slice which may allow the reconstruction of the values of interest, decrypting encrypted values along the way. Embodiments may directly instrument the reporting mechanism for the values of interest into the slices, so no changes to the runtime environment (emulator, Android firmware, etc.) might be necessary. Since each slice may be directly invoked regardless of its original position in the application code, no UI interaction or other external input might be necessary during slice execution. Therefore, embodiments may overcome the issues of limited code coverage that may exist with classical UI testing approaches. Security analysts might also use the slices computed by embodiments to improve existing analyses.

In a third step, embodiments might integrate the dynamically discovered values directly into the application. This means that code statements that use reflection, for instance, might be complemented by statements that directly call the target method originally called through the reflection API. Embodiments may provide many interesting runtime values, such as command-and-control messages and addresses, and successfully de-obfuscated malware which hides sensitive API calls through reflections. Also, this injection may allow off-the-shelf static analyses such as FlowDroid to correctly interpret formerly obfuscated behaviors that they would otherwise not be able to detect without any modification to the analysis tool.

Embodiments may provide a variation of traditional slicing algorithms fine-tuned to support the hybrid extraction of runtime information in currently known malware, a dynamic execution system for running the computed code slices and extracting the values of interest without user interaction, and an augmentation approach for re-injecting the obtained data values into the application as constants to enable further analysis with other off-the-shelf tools or by human analysts.

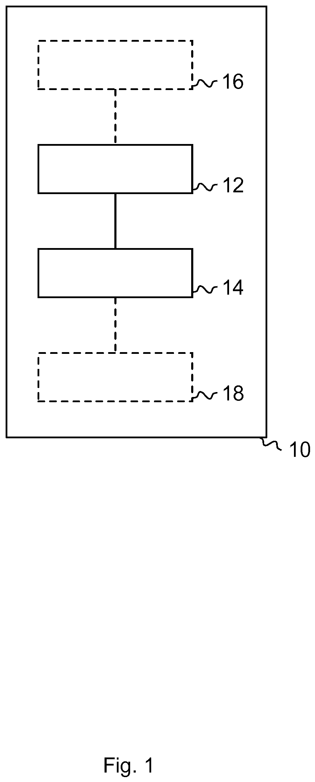

Fig. 1 illustrates a block diagram of an apparatus 10 for evaluating runtime information of an extracted set of instructions based on at least a part of a computer program, comprising an interface 12, an evaluation module 14, an optional extraction module 16 and an optional integration module 18. The interface 12 is coupled to the evaluation module 14. In some embodiments, the interface may be further coupled to the optional extraction module 16. In various embodiments the evaluation module may be further coupled to the optional integration module 18.

The apparatus 10 comprises the interface 12 to obtain the information related to the extracted set of instructions and information related to one or more logging points. In embodiments, a logging point may correspond to a combination of a variable of interest and the instruction at which it is of interest. In embodiments, an instruction may correspond to a programming statement in a high-level programming language, such as Java, C, C++, Objective C or Swift, and/or to a programming statement in a machine-level programming language, such as Assembler. In embodiments, an interface may correspond to a shared boundary across which two separate components and/or modules exchange information, such as, for example, a programming interface, or information exchange via a shared file format.

In some embodiments, the runtime information may correspond to information related to instructions, parameters and/or variables comprised in the original set of program instructions and related to the one or more logging points. In embodiments, the runtime information may correspond to the information related to instructions, parameters and/or variables comprised in the original set of program instructions and related to the one or more logging points, when the original set of instructions are executed, and variables have been computed. In various embodiments, the instructions, parameters, variables, and/or return values of the instructions of the original set might be replaced with runtime instructions, runtime parameters, runtime variables and/or runtime return values comprised in the runtime information. In at least some embodiments, the runtime information might be used for the analysis of malicious applications, de-obfuscation, for code analysis of first- or third-party software, or to support the reverse-engineering of protocols, interfaces or applications, and to support other static or dynamic (security) code analysis tools.

In some embodiments, the original set of program instructions may be based on a program code or a bytecode for a virtual machine. In at least some embodiments, the original set of program instructions is based on a software application bundle, an Android Application Package (APK), a Java Archive (JAR), or an iOS application. In embodiments, a bytecode may correspond to an instruction set design for efficient execution by a software environment, e.g. a virtual machine, such as the Java Virtual Machine (JVM) or the Dalvik Virtual Machine (DVM). In various embodiments, the original set of program instructions may be based on a program code in a dynamic or interpreted programming language, such as e.g. PHP (PHP Hypertext Preprocessor), JavaScript, Python, Ruby or Perl.

In at least some embodiments, the original set of program instructions may comprise obfuscated instructions and/or obfuscated data values. In embodiments, obfuscated instructions may correspond to instructions that are called by reflection, e.g. through the Android Reflection API, and/or instructions called by name, wherein the name is decrypted at runtime. Obfuscated data values may correspond to data values stored in an encrypted format, which may be decrypted at runtime.

In at least some embodiments the extracted set of instructions may comprise instructions to calculate and/or access one or more data values and/or runtime information related to at least one of the one or more logging points. In some embodiment, a calculation may correspond to an arithmetic calculation or a logical operation performed on at least the data value, and/or a general manipulation of the data value.

The apparatus 10 further comprises the evaluation module 14 to provide the runtime information, based on the information related to the extracted set of instructions and the information related to the logging points. The evaluation module 14 is configured to provide the runtime information by at least partly executing one or more subsets of program instructions comprised in the extracted set of instructions.

In at least some embodiments, the at least partly executing of the one or more subsets of program instructions may be performed by one or more sub-modules comprised in the evaluation module 14, or in an external module, such as an apparatus 20 for providing information related to runtime information, based on information related to an extracted set of instructions and information related to one or more logging points as described hereafter. In the latter case, the evaluation module 14 further comprises input and output functionality, as described in the following paragraphs, to communicate with the external module. In embodiments, further details for the evaluation module 14 may also apply to the apparatus 20, or, more specifically, but not exclusively, to a computation module 24.

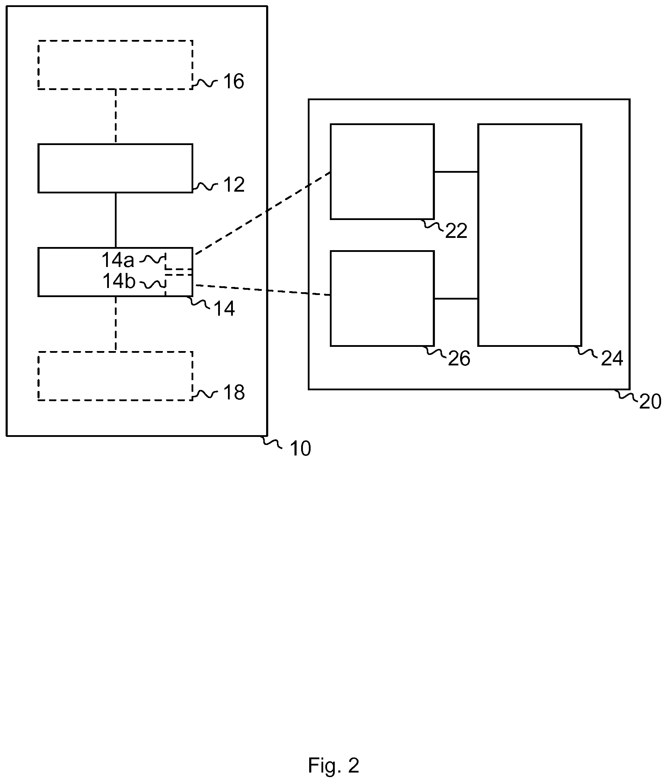

Fig. 2 illustrates a block diagram of an embodiment of the apparatus 20 for providing information related to runtime information, based on information related to an extracted set of instructions and information related to one or more logging points, comprising an input 22, the computation module 24, and an output 26. Fig. 2 further illustrates the apparatus 10, comprising the interface 12, the evaluation module 14, an output 14a, and input 14b, the optional extraction module 16 and the optional integration module 18. The computation module 24 is coupled to the input 22 and the output 26. The interface 12 is coupled to the evaluation module 14. In some embodiments, the interface may be further coupled to the optional extraction module 16. In various embodiments the evaluation module may be further coupled to the optional integration module 18. In at least some embodiments, the output 14a is coupled to the input 22, and the output 26 is coupled to the input 14b.

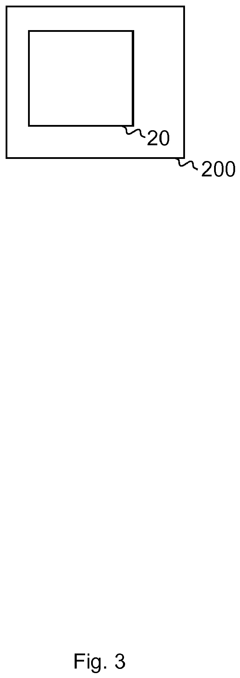

The apparatus 20 comprises the input 22 to obtain the information related to the extracted set of instructions and the information related to the one or more logging points. The apparatus 20 further comprises the computation module 24 to determine the information related to the runtime information, based on the information related to the extracted set of instructions and the information related to the one or more logging points and the output 26 to provide the information related to the runtime information. Embodiments further provide a mobile device 200 comprising the apparatus 20 of claim 16, as illustrated in Fig. 3

In embodiments the evaluation module 14 and/or the computation module 24, may be implemented using one or more processing units, one or more processing devices, any means for processing, such as a processor, a computer or a programmable hardware component being operable with accordingly adapted software. In other words, the described functions of the evaluation module 14 and/or the computation module 14 may as well be implemented in software, which is then executed on one or more programmable hardware components. Such hardware components may comprise a general purpose processor, a Digital Signal Processor (DSP), a micro-controller, a Field-Programmable Gate Array (FPGA), an ARM processor etc.

In some embodiments, the evaluation module 14 may further comprise the output 14a to provide the information related to the extracted set of instructions and the information related to the one or more logging points to an apparatus 20. The evaluation module 14 may further comprise the input 14b to obtain information related to runtime information from the apparatus 20. The evaluation module 14 may be further configured to provide the runtime information, based on the information related to runtime information. In embodiments, the information related to the runtime information may correspond to a database of runtime values, a set of logging files comprising information related to runtime values, memory dumps of executed subsets of the extracted set of instructions etc. An input may correspond to an interface for receiving information, which may be in digital (bit) values according to a specified code, within a module, between modules or between modules of different entities. An output may correspond to an interface for transmitting information, which may be represented by digital (bit) values according to a specified code or protocol, within a module, between modules, or between modules of different entities.

In some embodiments, the evaluation module 14, and correspondingly the computation module 24, may be further configured to complete the execution of a set of instructions in case an execution exception occurs. In embodiments, an execution exception may correspond to an interruption of an execution due to missing source variables, unexpected return values, memory errors, access to uninitialized variables or elements of arrays or lists, etc.

In some embodiments, the evaluation module 14, and correspondingly the computation module 24, may be further configured to reuse information related to intermediate results of the execution of a subset of instructions of the extracted set of instructions comprising the same instructions in the subset of instructions of the extracted set of instructions. In embodiments, intermediate results might correspond to calculated variables usable for the computation of multiple subsets.

In some embodiments, the evaluation module 14 may be further configured to provide information related to one or more program slices of the original set of program instructions, based on the information related to the extracted set of instructions. In embodiments, a program slice might correspond to a subset of instructions accessing and/or manipulating one or more data values related to one or more logging points.

In at least some embodiments, the apparatus 10 may further comprise an extraction module 16, to provide the information related to the extracted set of instructions, based on information related to an original set of program instructions, and the information related to the one or more logging points.

In embodiments the extraction module may be implemented using one or more processing units, one or more processing devices, any means for processing, such as a processor, a computer or a programmable hardware component being operable with accordingly adapted software. In other words, the described functions of the extraction module 16 may as well be implemented in software, which is then executed on one or more programmable hardware components. Such hardware components may comprise a general purpose processor, a Digital Signal Processor (DSP), a micro-controller, a Field-Programmable Gate Array (FPGA), an ARM processor etc.

In at least some embodiments, the extraction module 16 may be configured to provide the information related to the extracted set of instructions, based on the information related to the original set of program instructions, wherein the extraction module is configured to determine at least one instruction in the original set of program instructions accessing one or more runtime values. The one or more runtime values may be based on the information related to the one or more logging points, and the extraction module may be configured to extract the extracted set of instructions from the original set of program instructions relating to the accessing of the one or more runtime values. In embodiments, the one or more runtime values may correspond to one or more variables comprised in one or more dependency graphs of one or more variables comprised in the one or more logging points.

In at least some embodiments, the original set of program instructions may comprise one or more execution sequences, and the information related to the extracted set of instructions may comprise differing execution sequences based on the one or more execution sequences of the original set of program instructions. The extracted set of instructions may be based on subsets of the one or more execution sequences. In embodiments, the differing execution sequences may be based on branching instructions, e.g. two execution sequences may correspond to two different branching selections of a branching instruction. In at least some embodiments, an execution sequence may correspond to a sequence of instructions to calculate a data value, to call an external subroutine etc.

In some embodiments, the extraction module 16 may be configured to provide the information related to the extracted set of instructions based on program slices for the original set of program instructions, wherein the instructions comprised in the extracted set of instructions may manipulate and/or access at least one data value related to the one or more logging points.

In at least some embodiments, the apparatus 10 might further comprise an integration module 18 to provide information related to an evaluated set of instructions, based on the original set of program instructions and the runtime information. In at least some embodiments, the integration module 18 may be configured to resolve reflection calls to direct calls, resolve variables, resolve parameters, annotate intents, and/or resolve obfuscation transformations for the evaluated set of instructions, based on the runtime information. In some embodiments, the evaluated set of instructions may correspond to a set of instructions with a functionality equivalent to the original set of instructions, wherein the at least some of the variables and/or instructions of the original set of instructions may have been replaced my runtime values, to facilitate further analysis of the computer program.

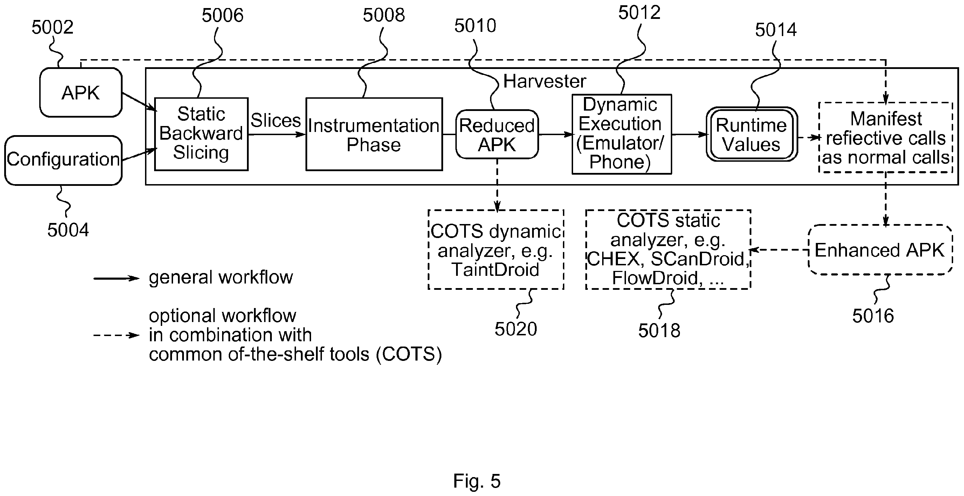

Fig. 5 depicts a general architecture of an embodiment. A usage scenario for at least some embodiments might be to compute a set of values of interest. In embodiments, a logging point *< **v**,**n*** > may be a pair consisting of a variable or field access ***v*** and an arbitrary statement s given that ***v*** is in scope at s. A value of interest may be the concrete value of variable ***v*** at a logging point < ***v,n*** >. For instance, a runtime values passed to a conditional check is of interest, such as s: if(***a***.equals (b)) the runtime values of ***a*** and b may be both values of interest at this statement s, inducing the two logging points < ***a,s*** > and < ***b**,**s*** >. Another example might be an API call to the sendTextMessage method such as s: sendTextMessage(argl, arg2, arg3, arg4, arg5) where < ***arg*1***,**s*** > and *<**arg3,s** >* might be the logging points at the method-call s. The corresponding runtime values or information may be the values of interest. For this, embodiments may first read an APK file 5002, which may correspond to the computer program, and a configuration file 5004, which may correspond to the logging points, defining the variable values to be retrieved together with the code points at which they shall be read. A first part of the analysis may be a static backwards-slicing computation 5006 starting at these code points, as will be further explained later. This slicing step might be run on a desktop computer or a computation server. The slices, which may correspond to the information related to the extracted set of instructions, might then be used to construct 5008 a new, reduced APK file 5010 which may contain the code required to compute the values of interest, which may correspond to the extracted set of instructions, and an executor activity. The task of the executor activity might be to invoke the computed slices and report the computed values of interest. This new, reduced APK file 5010 might then be executed 5012, for example by an evaluation module 14 and/or a computation module 24, on a stock Android emulator or a real phone. These steps might be fully automated; no user interaction might be required.

Optionally, a security analyst might use off-the-shelf dynamic-analysis tools to screen the reduced APK further 5020. This may be beneficial over analyzing the original APK 5002, as the reduced APK might only execute the behavior of interest and may be free of any runtime checks that could otherwise fool the analysis. For instance, if an analyst is interested in potential data leakages, he might use embodiments to produce a new APK, which may directly execute the slice that potentially leaks some sensitive information. Alternatively, the analyst might instruct embodiments to inject 5016 the discovered runtime values 5014 into the original application, which might be provided by the integration module 18. This may enable existing off-the-shelf static-analysis tools to further analyze the application 5018. This may be advantageous over analyzing the original application as runtime values and reflective method calls may now be statically embedded as constants respectively normal method calls in the application, allowing the tools to discover those calls and values.

In some highly-obfuscated applications, the logging point might not directly be identified. Assuming that the application uses reflection to call a method that sends out a text message and the analyst is interested in the telephone number to which the text message gets sent. In this case, he might use embodiments twice. In the first round, he might retrieve the targets of reflective method calls. With this information, he might then identify the actual logging point for the second round. In other situations, even further rounds might be required.

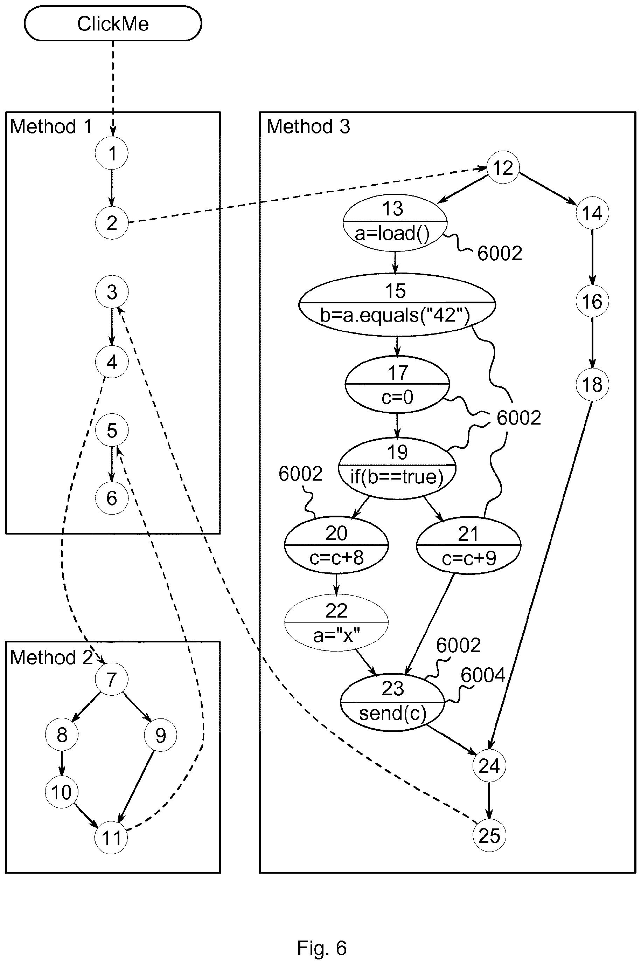

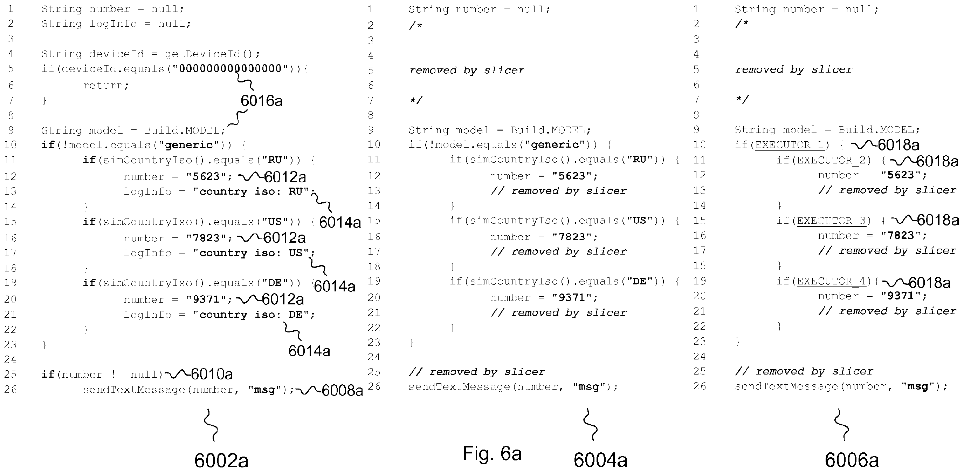

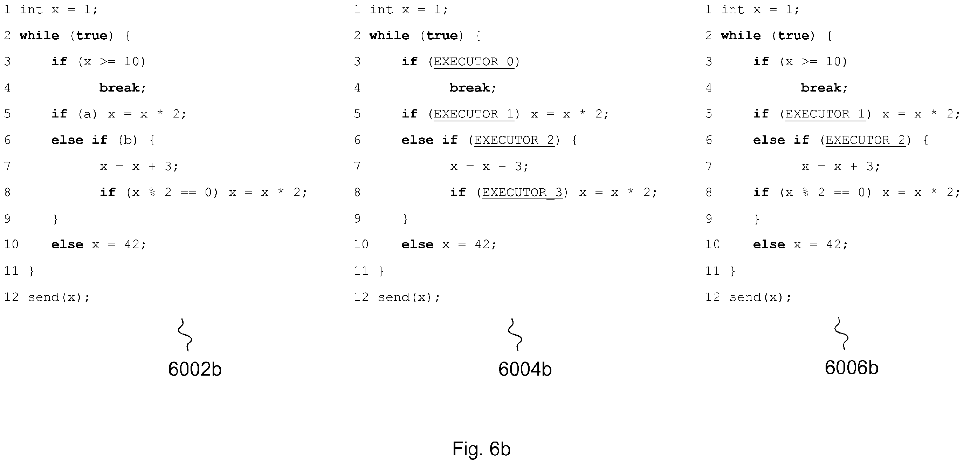

Computing a specific value of interest at a given position may typically only require the execution of a small fraction of the original program. Embodiments might identify and extract only those program parts that might actually influence the value of interest. Fig. 6 shows a simplified example application, as real-world obfuscated code may be considered too complicated to demonstrate the approach. In bold face, 6002, the statements required to compute the value being sent out through send(c) 6004 are shown; others might be considered irrelevant. Embodiments may build a new method containing the required statements 6002. During the execution phase, embodiments may invoke this method. Embodiments might not only erase the need to execute all non-bold-faced statements, it may also eliminate the need to trigger any specific user-interface actions. Instead embodiments may execute the relevant code directly that would otherwise be latent, only executing conditionally on those actions.

In traditional slicing as defined by Weiser, a program slice S may be an executable program that is obtained from a program P by removing statements, such that S replicates the behavior of P with respect to the slicing criterion. In Fig. 6, methods 1 and 2 might be irrelevant and may be safely be removed since all computations required for it may be local to method 3. Extracting the respective code from method 3 and directly invoking it during the later execution phase might not only significantly reduce the size of the code to be executed and thus make the execution faster, but may also remove the need to click on the "ClickMe" button. This may work because computing a specific value of interest at a given position may typically only require the execution of a small fraction of the original program that is in close proximity to the logging point.

Conventional slicing may be insufficient for the task at hand. Since real-world obfuscated malware code might be too complicated to demonstrate the slicing, the artificial example 6002a of Fig. 6a is introduced. In the example, the malware may send a text message to a premium rate number in line 26 6008a. The target telephone number might be stored in variable number 6010a. Depending on the country of the mobile carrier, different phone numbers may be used 6012a (lines 11, 15 and 19). The contents of the variable loglnfo 6014a might not be relevant for sending the premium-rate message.

The example has been inspired by the Pincer malware family which may scan for various system properties and refrain from the malicious behavior if traces of an emulator are found. Such checks may form a very common pattern which may be used in other malware families as well. In the example, such checks are carried out in two different places: Line 5 and 10 6016a.

6004a may show the output of a conventional slicer for the example program. All references to the unrelated loglnfo may variable have been removed. The first emulator check in Line 5 may have also been removed together with all computations that were only necessary to carry out this single check. This may happen because the conditional in Line 5 may only define if the target telephone number is computed, not how. The slicing criterion might have no data dependency on this check. This reasoning may apply to many time bombs and logic bombs which might thus safely be removed without affecting the outcome of the computation of the value of interest.

When executing the slice in 6004a within an emulator, the variable number may remain null, since the emulator check in line 10 may fail. Conventional slicing may aim at constructing a slice that mimics the behavior of the original program in the current environment. In this current (emulated) environment it may be correct, to compute null for the number, but to the security analyst, who wants to know all possible target phone numbers, it might not be helpful. More generally, an analyst may wish to retrieve all values of interest that can be computed in any environment, regardless of the (typically emulated) environment in which the slice is currently being executed. With a traditional slice, the analyst might still emulate all these possible environments. As environment dependencies in general, and emulator checks in particular, may exist in a wide variety of ways, simulating all possible combinations of these environment variables may be infeasible in practice.

To cope, embodiments may extend program slicing with a special treatment of conditionals. For those conditionals that may influence which value is computed, at runtime, embodiments may explore both branches as each branch may potentially define a different runtime value for the respective variable of interest. To force a specific path to execute, embodiments may replace all conditionals contained in the slice with static Boolean expressions as shown in 6006a. This may make the slice parametric with at least one instance of every possible value of interest.

When evaluation the slice, embodiments might run the example once for each of the 16 possible combinations of the Boolean values EXECUTOR_1 through EXECUTOR_4 6018a. This may enumerate possible outcomes of the computation for number.

Applying this principle to real-world apps, however, may lead to a number of challenges. When replacing conditionals, it might be important not to break the semantics of the target program. Ideally, for every value of interest computed by embodiments, there may exist a possible runtime environment in which the original program would have computed the same value.

Fig. 6b 6002b shows an embodiment of a more complex computation for the value of interest at logging point < ***x,*12** >. If all conditionals in this example were blindly replaced, the slice shown in 6004b might compute the value 1 in some case (EXECUTOR_0 set to true) and not terminate in all other ones (EXECUTOR_0 set to false). The correct values computed by the original program (16, 11, 42) might never be computed by the parametric slice.

This may happen because the Boolean values may remain constant for each execution, i.e., an instance of the parametric slice may either always take the left branch or always take the right branch for the respective conditional. In program verification, such issues may often be addressed by unrolling loops. Since embodiments may prepare a parameterized slice for dynamic execution, unrolling the loops up to a sufficiently large number of iterations might be infeasible. If the number is too low, it may cause embodiments to miss the actual output of the computation. If it is too high, it may lead to a combinatorial explosion of the possible Boolean values and resulting paths: for n conditionals, up to **2*ⁿ*** paths might be explored.

At least some embodiments may follow a different approach. Conditionals that only have data dependencies on the values of interest, i.e., are internal dependencies in the slice, might not be replaced with Boolean variables in the first place. They might be retained as they are in the original program. In 6002b, this means that the conditionals in Lines 5 and 6 may be replaced with EXECUTOR_1 and EXECUTOR_2 respectively, while expressions in line 3 and 8, which depend on x, might be kept untouched, as shown in 6006b. This way, embodiments might explicitly steer the execution into specific paths while keeping intact the computation of the values of interest in most cases.

In some cases, replacing the original conditionals with Boolean variables might cause the slice to compute a different value than the original program. More precisely, there might be environments in which the original program computes a value that cannot be computed by any instance of the parametric slice. Especially for conditionals with no direct data-flow dependency on a loop counter, embodiments might replace a conditional with a static Boolean expression which might force the execution once into skipping the loop completely and once into looping infinitely, disregarding the original semantics. To avoid termination issues, embodiments may limit the maximum iteration count to a fixed value and abort the loop if this limit is exceeded. Though this may lead to false results, in many cases, it might not seem to pose problems for analyzing state-of-the-art malware samples as many obfuscation and decryption algorithms used by current malware might manipulate values from the code or from a file. They might not use loops to dynamically generate completely new values.

At least some embodiments may over-approximate the paths to be executed, so they may return false positives, i.e., values that could not be computed by the original program in any given environment. Since embodiments might not make assumptions about the possible set of environments, they may explore spurious paths as well and return spurious values. In practice it seems that the amount of such spurious information may be low and not put any significant burden on an analyst.

At least some embodiments might provide special handling for API calls that access environment values such as free-text user input. Since the slice might be automatically executed without user interaction embodiments may inject dummy values instead of the actual API calls that read out the UI. This may prevent the slices from crashing even if they still access some external resources.

In some embodiments, the slicing algorithm might only follow data dependencies. In the example graph, this may cause embodiments to exclude node 12 and all its predecessors from the slice. Such control dependencies, caused by conditionals, may instead receive a special treatment, further explained later. This may be considered very different from traditional slicing but may allow embodiments to circumvent any emulator detection checks that the application might perform. Even malware that hides its malice through time bombs or logical bombs might be analyzed with this technique.

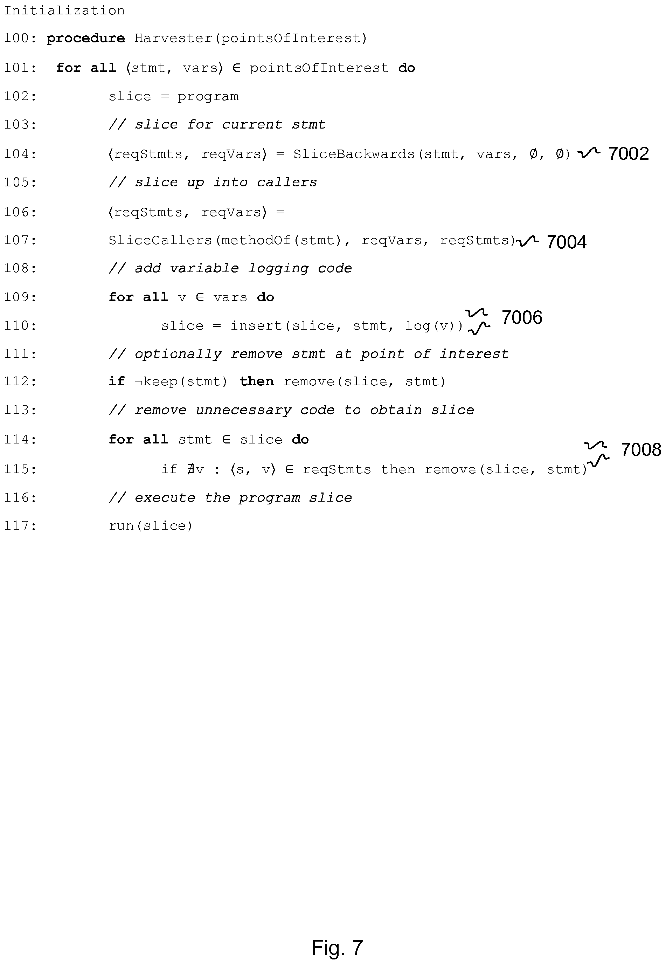

Fig. 7 shows the initialization and basic structure of an embodiment. For every point of interest, embodiments might create a new backwards slice, starting from that very point of interest (line 104, 7002). Since the start point of the slice might not only depend on the containing method and its callees, but also on initialization code done in methods executed earlier in the original program such as the containing activity's onCreate() method, the slicing process may be continued into all potential callers (line 107, 7004) of the method containing the point of interest. Afterwards, embodiments may insert code for dynamically logging the runtime values at the points of interest (line 109, 7006). Finally, embodiments may remove code not required for running the slice (line 114, 7008) and may execute the slice (line 117, 7010).

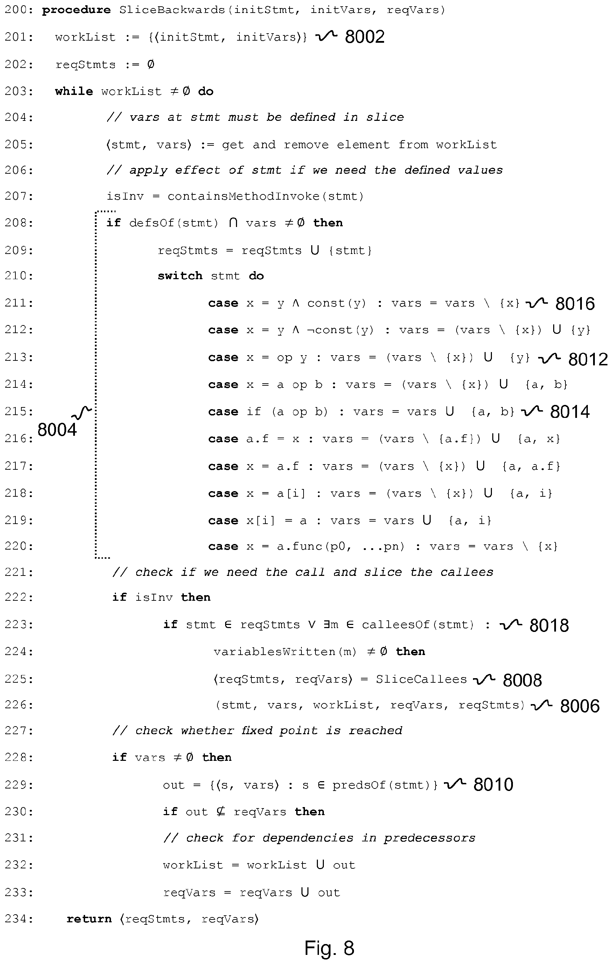

Fig. 8 shows a simplified version of embodiments not considering aspects such as aliasing. Embodiments might handle the full Java language including aliasing, loops, recursion etc.. Embodiments might start at the statement of interest, for instance at send(c) 6004 in the example in Figure 6 where the value of c may be of interest. In embodiments, a combination of a variable of interest and the statement at which it is of interest may be called a logging point.

In line 201 8002, embodiments may be initialized with workList = hsend(c), {c}i. As long as the work list is not empty, some embodiments may select a statement from it, initializing the analysis. If the statement defines or overwrites a variable, earlier values of this variable might not be required. If the computation of this new value however requires other values, their values might be computed before (lines 208 to 220 8004).

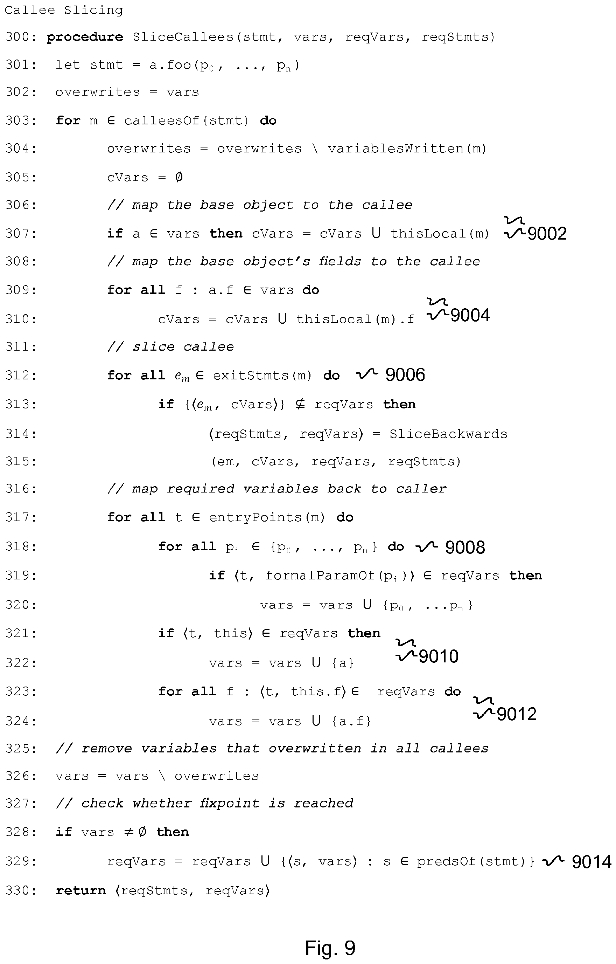

In the example, an invocation is found (line 226 8006). Its parameters might not be directly marked as "required" since in the callee they might not be used for the particular computation of interest. Possible callees may be sliced using method SliceCallees (line 225 8008) from Fig. 9. It may map the base object of the call (line 306 9002) and all fields reachable through it (line 308 9004) into the scope of all possible callees. Parameters might not be mapped since this is a backwards analysis and the callee is entered from the return site. Embodiments may then slice the respective callee (line 312 9006) using the same function SliceBackwards. When the callee has been sliced, the call parameters (line 318 9008), the base object (line 321 9010), and the reachable fields that are not overwritten in all callees (Field 323 9012) might be mapped back to the caller as required inputs. Note that embodiments may consider the send method as a library function, so the slicer might not remove any code from it. Consequently, function SliceCallees might keep the original list of required values in this case and might schedule all parameters as required in line 329 9014.

For the caller, embodiments might then continue with line 229 8010, where the predecessors of the current statement are scheduled in the work list, i.e., a="x" and c=c+9. The first statement might not be marked as required since it may have no side effects on any variables in the required list variables = {c} and the variables set might simply be passed on as-is to the next predecessor (c=c+8). The second statement defines c, but might also require a value for it, which marks the statement as needed, but might leave the variables list unchanged (line 213 8012). The if statement adds b to variables (line 215 8014). Embodiments may then reach the initialization of variable c and remove c from variables (line 211 8016). As b is still in the list, the slicing might continue upwards using the same principles. For computing b, a value for a may be required. When the algorithm reaches the definition of a, no further values might be unknown and the work list may run empty.

To cope with loops and recursion, embodiments may execute in a fixed-point iteration that saves the set of required statements in reqVars together with the variables whose values still need to be determined by further backwards slicing. In embodiments, every statement in the target program might either be in reqVars once (i.e., is part of the slice) or not at all (i.e., it is not part of the slice). If the slicer encounters the same statement twice, due to loops or recursion, it might already be in the set and the slicer might not need to need to further process it or its successors. If all required statements are in the set, embodiments might terminate.

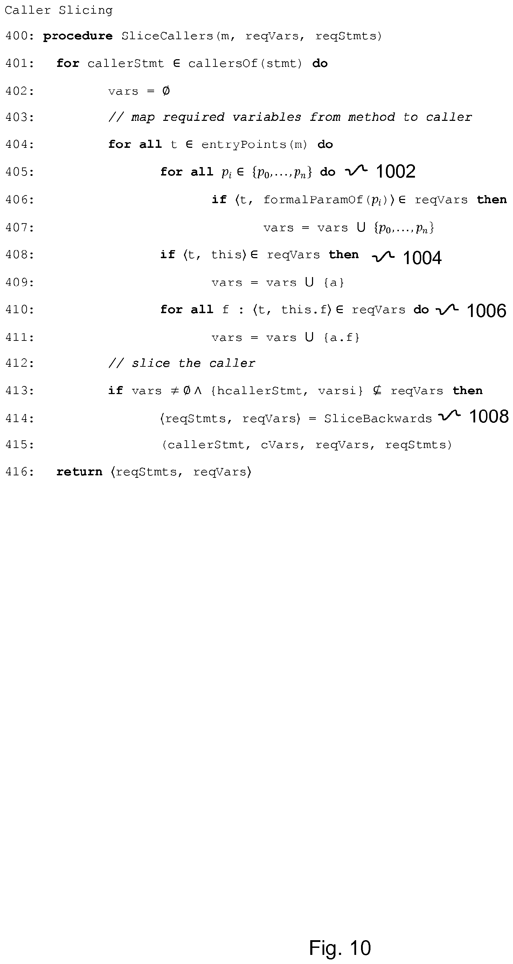

For callers, as shown in Fig. 10, the slicing process might start at the point of interest and scan backwards in the respective method. However, code that runs at an earlier time in the app's lifecycle such as a static initializer or the onCreate() method of an Android component might also need to be executed at runtime to ensure correct computations in the extracted slice. Embodiments might therefore traverse the call stack upwards to find such initialization code. The technique might be similar to the callee slicing. It might check whether any parameter values (line 405 1002), base objects (line 408 1004), or fields reachable through the base object (line 410 1006) may need to be known at the beginning of the current method, and, if so, might start a new slicer for the caller to find their respective initialization (line 414 1008). In embodiments, there may be multiple possible call sites for one method, and slicing might be started for all of them.

Embodiments might use a function variablesWritten to determine the side effects of a method. If a method has no side effects and its return value is not needed, the respective call site might be removed from the slice (line 223 8018). This might also remove the need to compute its parameters, which may allow for further slice compaction. Embodiments might allow experts to manually declare library methods such as Integer.valueOf as side-effect free. For user code, embodiments might perform an automated side-effect analysis instead of relying on external domain knowledge. If all callees of a statement overwrite a certain value, all prior values of this variable might be safely ignored and their computations might be removed from the trace.

If a callee never uses one of its parameters in the slice, the respective parameter might be removed to simplify the code without changing its semantics. Removing a parameter may, however, violate the contract of implemented interfaces or superclasses. Therefore, the respective parameter might be kept, but be replaced with a dummy constant, thus avoiding the otherwise potentially costly computation of the actual value.

For very large programs, computing exact slices might be infeasible. Embodiments might therefore support both callee- and caller-cutoffs. These options might define the maximum call-stack depth up until which the slicer will proceed upwards or downwards from the original points of interest. After the cut-off, all further callees might be taken as-is without any slicing. All callers exceeding the cut-off might be disregarded, i.e., embodiments might assume that no further earlier initializations are required and might replace the variables with dummy values. Many applications may use API classes such as Shared Preferences to store data, which may be later retrieved and then e.g., sent out to the internet. Storage and retrieval might be distributed among the program, such as being executed when different buttons in the user interface are clicked. A slicing approach that might not model this data dependency between user actions might yield an incorrect slice that may try to read non-existent data from an uninitialized data store. To handle these cases, embodiments might resolve calls that write to persistent storage and prepend them to the slice.

Slices extracted during the static slicing phase might yield a new method in a reduced APK file provided by embodiments, which may correspond to the information related to the extracted set of instructions. An executor activity injected into the same APK file might call all these methods one after another, which may occur after the reduced APL has been started on an unmodified emulator or a stock Android phone. An executor, which may correspond to an evaluation module 14 or an apparatus 20, might write the computed runtime values into an SQLite database on the device's SD card that might then be downloaded and evaluated on a desktop computer. Since the slices might be executed directly, regardless of their original position in the application code, embodiments might require no user interaction that might otherwise be necessary to reach the code location of the computing statements. If, for instance, the extracted code was originally contained in a button-click handler, it might have required the user or an automated test driver to click that button to be executed. Embodiments might execute the sliced code directly, making this unnecessary. The reduced application might not even contain any Graphical User Interface (GUI) elements from the original app. The reduced app might also be packaged with the same resources as the original app, such that code that might load encrypted strings, for instance, from external resources, might find those resources also in the reduced APK.

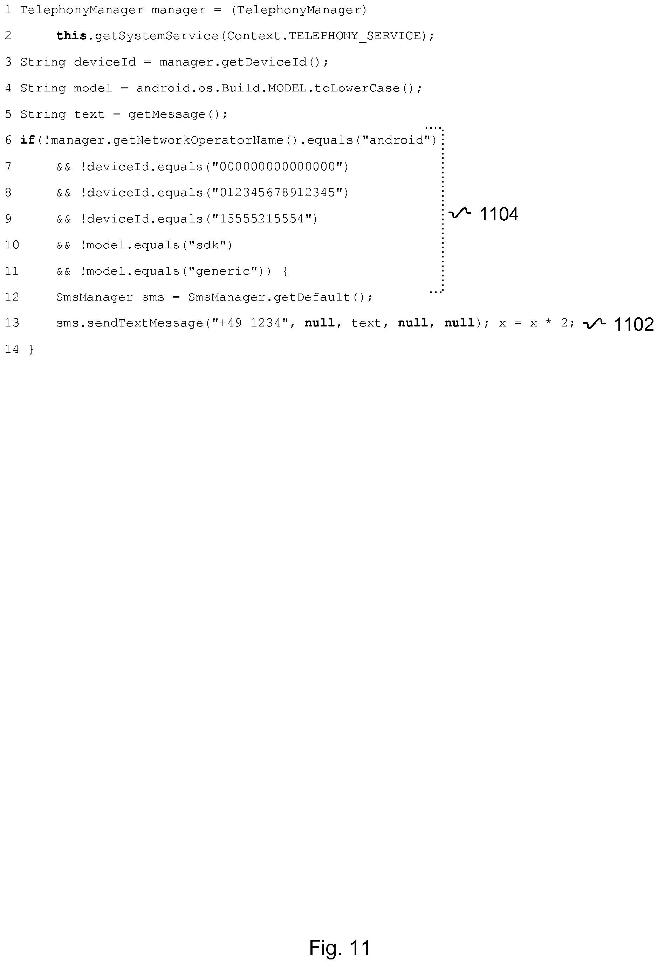

Embodiments might deal with emulator-detection code which may try to evade analysis: since this code does not directly influence the values of interest, embodiments might make it part of the slice. Fig. 11 shows a code snippet from the Pincer malware family which scans for various system properties and refrains from the malicious behavior if traces of an emulator are found. This may be considered a very common pattern which may be used in other malware families as well. In the example, the malware sends a string to a specific number via SMS. The contents of the variable text in line 13 1102 might be considered not to be data-dependent on the emulator checks 1104 (Lines 6-11), which might allow the checks to be safely removed. The same might also apply to time bombs and logic bombs. For the same reason, the respective code might not become part of the slice either.

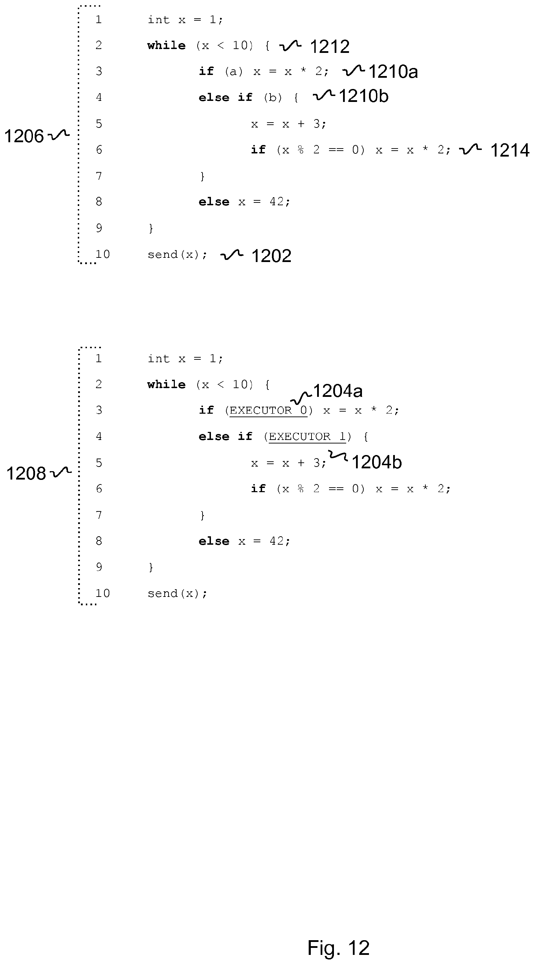

If the conditional branches do influence the value of interest, such as, for x in line 10 1202 of the contrived example of Fig. 12, embodiments might explore both branches. Every branch might potentially define different runtime values for the respective variable. To force a specific path to execute, embodiments might replaces all conditionals contained in the slice with static Boolean expressions that are under the control of the executor. The executor might run the example once with all four possible combinations of the EXECUTOR_0 1204a and EXECUTOR_1 1204b boolean variables (true/true, true/false, false/true, false/false).

When replacing conditionals, it might be important not to break the semantics of the target program. Code 1208 might compute the same value for variable x as the original code 1206. Therefore, variables that only depend on the values of interest, i.e., may be internal dependencies in the slice, might not be transformed. In 1206, this means that the conditionals in Lines 3 1210a and 4 1212b might be replaced to EXECUTOR_0 and EXECUTOR_1 respectively, while expressions in line 2 1212 and 6 1214, which depend on x, might be kept untouched. This distinction might be used to avoid generating spurious results due to inconsistent branching. This way, embodiments might explicitly steer the execution into specific paths while keeping many algorithms intact and avoiding changes to algorithm semantics, e.g., for decryption routines.

Embodiments might also cope with dynamic code loading and native methods, as long as all code containing the logging points may be contained within the APK's bytecode at instrumentation time. If, for instance, the value of an SMS message is computed by calling a dynamically loaded function using reflection, or by invoking a native method, the slicer might declare this function as required and the evaluation module might execute the function as any other function, providing the same implementation that might also be invoked during normal app execution.

If the values in question depend on conditionals, such as in 1206, code slices might contain more than one possible path. To obtain all possible values, embodiments might follow possible paths and might evaluate respective values on those paths. In general, this might lead to **2ⁿ** paths if n is the number of conditionals between the introduction of the variable and the position where it is used. In practice, however, many of those paths might yield the same value. Embodiments might therefore support randomly picking a predefined maximum number of slice instances (i.e., combinations of the Boolean variables) to execute. While this may generally lead to missed values of interest, in practical application this point might not be a limitation.

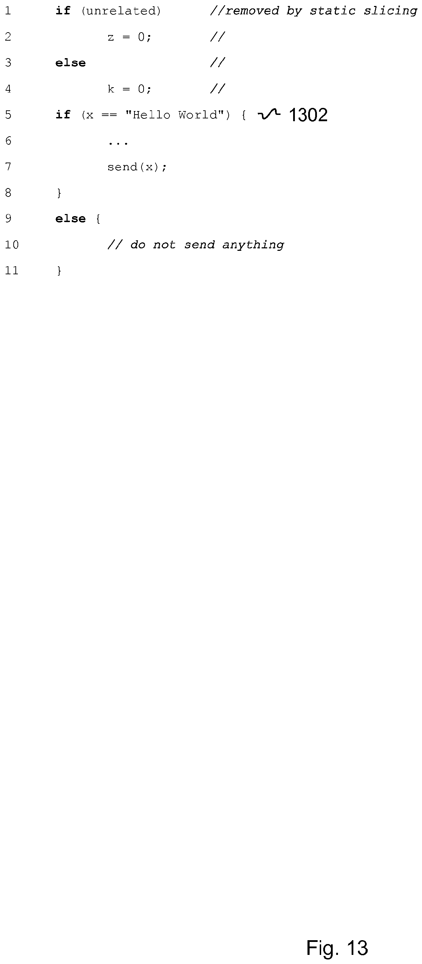

In embodiments, not all conditional branches might affect the values of interest. Embodiments might thus apply a set of heuristics, causing only a configurable fraction of these paths to actually execute. If, for instance, a logging point might only be reached if a variable has a specific constant value such as in Line 5 1302 in Fig. 13, embodiments might assume the variable to have this constant value. The "else" branch of such a conditional might not be executed, as it might not lead to any logging point. Removing conditionals with empty branches might be considered another improvement. In Line 1, neither branch might influence the value of interest x, and respectively, both branches might be removed during slicing. This might allow to also remove the whole conditional as it may become irrelevant which branch is chosen.

In embodiments, only for those conditionals for which both branches influence the value of interest, both possible paths might be executed. To limit the required execution time in those cases, embodiments might omit paths. Embodiments might prefer to abandon paths that are farther away from the logging point as they might be presumed to have less influence on the actual outcome of the computation.

Existing static-analysis approaches may rely on a call graph to determine which target method a method invocation actually causes to execute. For the large fraction of malware applications that are obfuscated using reflective method calls, such as the example in Fig. 4, the construction of a call-graph may fail. Some tools might not support reflective calls at all during call-graph construction, while others may support the resolution of reflective calls with constant target strings, but might not handle dynamically constructed method or class names. Embodiments, however, might aid those off-the-shelf tools by manifesting the runtime values of reflective call targets resolved during the dynamic execution as ordinary method calls in the application's bytecode. This might allow existing call-graph construction algorithms to construct a sound call graph with ease.

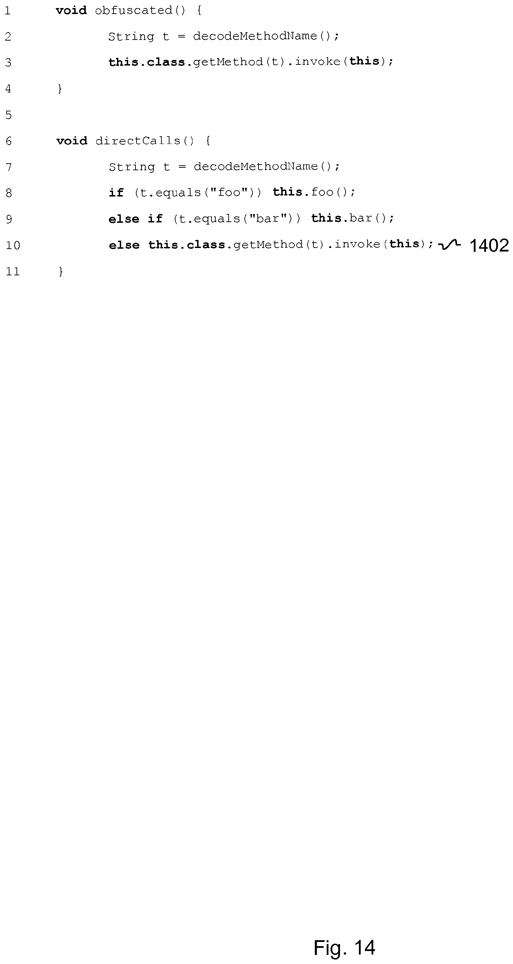

Method obfuscated() in Fig. 14 shows a simplified example of a reflective method call. Embodiments might detect two different possible runtime values for variable t, namely "foo" and "bar". Embodiments might replace the method obfuscated with method directCalls that may contain direct call edges to these two target methods. To allow for cases in which there are further call targets which embodiments did not detect dynamically, the old reflective call might be retained in the fall-through branch (line 10 1402). Off-the-shelf analysis tools might then analyze the enriched APK file without requiring special handling for reflection or string operations used to build the target method name. The enriched APK files might be functionally equivalent to their respective originals and might only use normal application-level code. Running them might not require any changes to the operating system or the emulator.

Embodiments might use this technique for reflective method calls, but it might also be applied for other obfuscated strings as well, such as target telephone numbers of SMS messages, to aid existing pattern-based malware-detection tools. Injecting the action strings and Uniform Resource Identifiers (URIs) of Android intents used for inter-component and inter-application communication might also be provided by an embodiment. Many static analyses might fail if these strings are not constant as they can no longer map intent senders and receivers. The same may also apply to class-name strings used with explicit intents. If they are only decrypted at runtime, static analyses might only conservatively assume all recipients to be possible, which may be considered highly imprecise. Injecting these strings as constants might enable tools to reconstruct the inter-component call graph more precisely and correctly identify the data flows between components and applications which would otherwise not be possible.

Some embodiments have been implemented in a HARVESTER project. In HARVESTER, static slicing might be implemented using the Soot framework for static program analysis and transformation, which may directly read and write Android APK files. HARVESTER might use Soot's Jimple intermediate representation which may comprise a flat, three-operand language optimized for static analyses.

To make the generated slices as precise (and thus as small) as possible, HARVESTER may require a precise call graph of the target application. Soot's call-graph construction engine Spark may provide such an initial call graph. Soot may be capable of building a call-graph based on a program's entry points. Since such an entry point might not exist for Android applications, an artificial main method might be created using the AndroidEntryPointCreator component of FlowDroid, an existing Soot-based open-source static taint-analysis tool.

Initially, this graph might be missing call edges for reflective calls, as exactly those calls are the task of HARVESTER to discover during its dynamic pass. Once the calls have been discovered, and embedded as direct calls in the APK, the same procedure might be iterated, expanding the call graph, potentially discovering more reflective call sites, dynamically resolving their targets, etc. In practice, however, the HARVESTER project found that this reiteration might not be necessary, as current malware might not usually call reflection APIs themselves using reflection.

HARVESTER may execute the extracted slices by calling their entry points from an artificial executor activity injected into the resulting APK file. A slice, however, may have references to other Android components. Also, if the code was originally executed after the user clicks on a button, it may expect the hosting activity to be initialized. HARVESTER might thus emulate this activity's lifecycle at runtime. Naive calls to lifecycle methods, however, might cause problems, as the Android operating system may expect certain internal variables such as the used Context to be set which cannot be achieved through the normal interface. HARVESTER might therefore use reflection to inject these initialization values. The usual way of switching activities via Intents may not present a suitable alternative as it might not give HARVESTER control over the lifecycle methods, leading to unnecessary code execution.

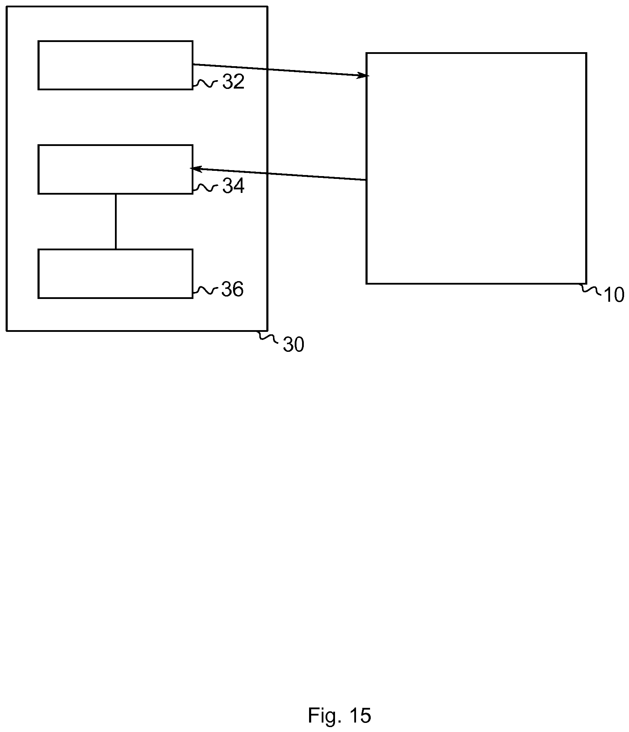

Embodiments further provide an apparatus 30 for providing information related to code properties, based on an original set of program instructions. Fig. 15 illustrates a block diagram of the apparatus 30, comprising an output 32, an input 34 and an evaluation module 36. Fig. 15 further illustrates an apparatus 10. The output 32 is coupled to the apparatus 10, which is further coupled to the input 34. The input 34 is further coupled to the evaluation module 36. The apparatus 30 comprises the output 32 to provide the information related to the original set of program instructions for the apparatus 10 as described above. The apparatus 30 further comprises the input 34 to obtain runtime information from the apparatus 10 and the evaluation module 36 to provide the information related to code properties, based on the runtime information.

In embodiments, the information related to code properties may correspond to information related to indications that the original set of program instructions comprises malware, information related to external subroutines called by the original set of program instructions, information related to data sources used by the original set of program instructions, information related to data transmitted by the original set of program instructions etc.

In embodiments the evaluation module 36 may be implemented using one or more processing units, one or more processing devices, any means for processing, such as a processor, a computer or a programmable hardware component being operable with accordingly adapted software. In other words, the described functions of the evaluation module 36 may as well be implemented in software, which is then executed on one or more programmable hardware components. Such hardware components may comprise a general purpose processor, a Digital Signal Processor (DSP), a micro-controller, an ARM processor etc.

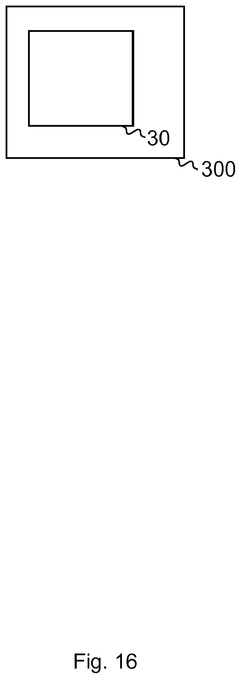

Fig. 16 illustrates a block diagram of a mobile device 300 comprising the apparatus 30. In embodiments, a mobile device, or mobile transceiver, may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

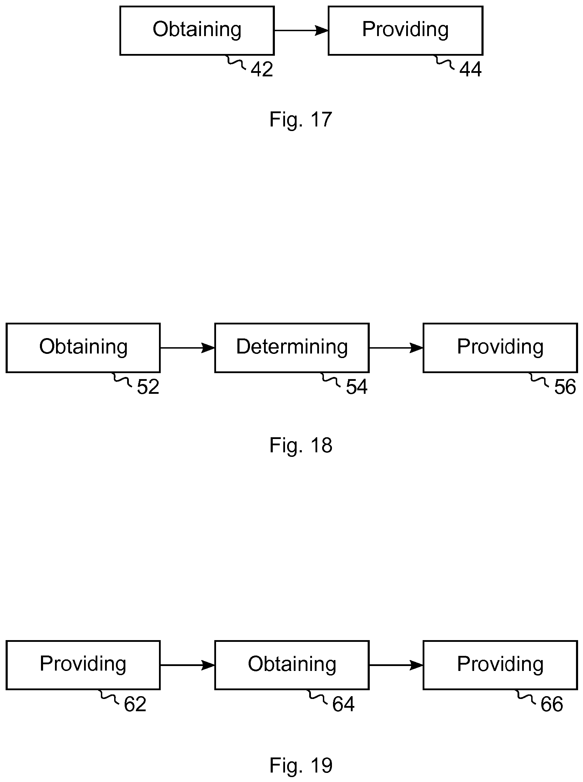

Fig. 17 illustrates a flow chart of an embodiment of a method for evaluating runtime information of an extracted set of instructions based on at least a part of a computer program. The method comprises obtaining 42 the information related to the extracted set of instructions and information related to one or more logging points and providing 44 the runtime information, based on the information related to the extracted set of instructions and the information related to the logging points. The providing of the runtime information is based on at least partly executing one or more subsets of program instructions comprised in the extracted set of instructions.

Fig. 18 illustrates a flow chart of an embodiments of a method for providing information related to runtime information, based on information related to an extracted set of instructions and information related to one or more logging points. The method comprises obtaining 52 the information related to the extracted set of instructions and the information related to the one or more logging points. The method further comprises determining 54 the information related to the runtime information, based on the information related to the extracted set of instructions and the information related to the one or more logging points. The method further comprises providing 56 the information related to the runtime information.

Fig. 19 illustrates a flow chart of an embodiments of a method for providing information related to code properties, based on an original set of program instructions. The method comprises providing 62 the information related to the original set of program instructions for an apparatus 10 as described above. The method further comprises obtaining 64 runtime information from the apparatus 10 and providing 66 the information related to code properties, based on the runtime information.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

In an evaluation of the HARVESTER project, the coverage of logging points has been measured. A perfect tool would reach every logging point. Thirteen different malware samples were chosen, some of which are known to be highly obfuscated (Fakelnstaller, GinMaster and Obad). These samples may heavily rely on reflection to mask the targets of method calls. Another malware family, Pincer, may be known to hinder dynamic evaluation through anti-emulation techniques. Ssucl and Dougalek steal various private data items.

In summary, HARVESTER has been shown to detect at least one value for 99% of all logging points. Due to the controlled execution of value-influencing branches, HARVESTER may succeed in reporting multiple values for many logging points. Discovering more than one value may be useful for analyzing the behavior of an application (e.g., scamming telephone numbers for SMS fraud in different countries instead of just a single number). HARVESTER might even be able to cope with the anti-analysis techniques used by the Pincer malware family where it may successfully extract the SMS number and message, URIs, shell commands and various file accesses.

The small fraction of missed logging points may, in embodiments, be mainly caused by missing initialization of important runtime values due to configured cut-offs during the static analysis.

Harvester was also compared with SAAF, a static approach for identifying parameter values based on a backward slicing approach starting from a method call. This method may be considered similar to the static backward analysis part in HARVESTER. SAAF and HARVESTER were evaluated on 2,600 malware samples from MobileSandbox. The logging points for both tools were the number and the corresponding message of text messages. The results for SAAF show that the tool might not support semantics of string operations such as concatenation. Instead of the concatenated string, SAAF may report the two distinct operands. This may give only partial insight into the behavior of the application. In some cases, SAAF might not even find all necessary fragments of the target telephone number (e.g. 1065-5021-80133). In contrast, HARVESTER extracted the final, complete SMS numbers for all of the samples and even reports numbers in cases in which SAAF did not yield any data.

Furthermore, SAAF might not support extracting the texts of the SMS messages being sent since they are usually not string constants, but built through concatenation and string transformation. Due to its static nature, SAAF might not handle reflective calls either which might not be an issue for HARVESTER due to the dynamic execution. This shows that embodiments such as HARVESTER may have the opportunity to handle semantic operations more effectively than purely static ones like SAAF.

As the results above show already, HARVESTER may show a higher recall than classical testing-based approaches currently known to literature, which, on average, may only reach about 30% to 60% code coverage. Under the assumption that the logging points are uniformly distributed over the application code, this means that only 30% to 60% of all logging points might be reached at all. These numbers suggest that a hybrid approach of slicing and executing might be more appropriate to Android applications than finding concrete test patterns.

To validate this impression further, HARVESTER was also tested on 150 samples from 18 malware families taken from the Malware Genome Project. HARVESTER's recall was compared with Google's Monkey's which was run with at least 1,000 randomly-generated events per app that were limited to normal user interactions (click, swipe, navigation button use). The goal was to find the telephone numbers to which SMS messages are sent. To count the respective logging points reached by Monkey, the bytecode of the malware samples was instrumented to create a log entry directly before sending the message. The results were evaluated by using Logcat. All tests with Monkey were carried out on an Android 4.1 emulator (API version 16).

As expected, the emulator-detection techniques prevented Monkey from ever reaching any logging points in most malware samples. In total, Monkey only found values for 15.6% of all logging points. In only 9.33% of all apps, it found a value for at least one logging point. Many malicious applications such as the GoldDream, BaseBridge, and BgServ malware families as well as the DogWars app may perform their malicious activities in a background service that is started when the phone is rebooted. To obtain the respective runtime values, traditional dynamic approaches might also generate such external events and restart the phone. HARVESTER might instead directly execute the code slices containing the logging points and thus might not need to emulate these events. Furthermore, tools such as Monkey might only improve code coverage by triggering interactions in the user interface. Some malware apps from the GPSSMSSpy family, however, contain a broadcast receiver that directly leaks incoming SMS messages and which may be completely distinct from the UI. While Monkey might never execute the respective code, HARVESTER may directly invokes the slice containing the data leak regardless of its original position in the code.

To overcome these issues with Monkey, the AndroidHooker open-source dynamic testing toolkit was used which may first prepare the emulator with fake "personal user data" such as contacts, before installing the application and exercising it using Monkey. AndroidHooker may also send external events such as incoming SMS messages and might reboot the emulator during the test to trigger actions that only happen at boot time. This approach may be able to reveal the premium SMS message in come applications, but might not solve the code-coverage issue in general. For instance, it may still fail if the malicious code is only executed after receiving a command from a remote server, such as, for example, in the GoldDream malware family. HARVESTER may succeed nevertheless, as the conditional checking for the server's command might not be part of the slice that HARVESTER computes, and the code containing the logging point might be directly and unconditionally executed. Due to such issues, AndroidHooker only found 16.31% of all logging points. In 10.67% of all apps, it found a value for at least one logging point.

All in all, with finding values for 74.47% of all logging points HARVESTER may show a much better recall for these malware samples as it might neither be limited by time bombs, nor logics bombs, and might not require any external inputs to be simulated. In 86% of all apps, a value for at least one logging point was found. To further augment these numbers, in embodiments, inter-component communication may be considered in the analysis.

App Stores such as the Google Play Store may receive many thousand new or updated Android apps per day which they may check for malicious behavior. Therefore, fast tools which scale to the size of the market are required. HARVESTER was tested on 10,282 malware samples from VirusShare, 620 apps (only SMS trojans) from the Malware Genome Project, and 2,600 malware samples from MobileSandbox. HARVESTER was configured with 3 logging-points both for the SMS phone numbers and the respective text messages. 1,926 of all apps under evaluation contained at least one logging-point in each of these two categories. With HARVESTER, the real values for phone numbers and text messages may be effectively found, so they might be compared to known blacklists or apply existing filters for identifying scamming malware.

The performance evaluations reported in this section were run on a computation server with 12 AMD Opteron 8356 cores running Debian Linux 2.6 with Oracle's Java HotSpot 64-Bit Server VM version 1.7.0 and a maximum heap size of 20 GB to avoid intermediate garbage collection. On average, HARVESTER took between 25 and 45 seconds and it extracted various distinct SMS telephone numbers, and distinct SMS messages. Thus, HARVESTER might be used for mass analyses and while delivering results very quickly.

During the analysis, embodiments, such as the HARVESTER project have been used to find and de-obfuscated a number of obfuscation techniques. For instance, a growing number of sophisticated Android malware applications such as Obad may use reflection to call methods identified by encrypted string constants which only get decrypted at runtime. HARVESTER was used to recover the targets of these reflective method calls and found two popular obfuscation patterns. In the first pattern, only sensitive API calls, such as "getSubscriberID", "getDeviceId", or "sendTextMessage" might be obfuscated, which is likely to be the result of a manual obfuscation to hinder human analysts or automatic tools that looks for sensitive API calls such as CHABADA. In the second pattern, all method calls may be obfuscated, even noncritical ones such as "StringBuffer.append()" or "String.indexOf()", which is most likely the result of automatic obfuscation tools such as DexGuard. In some applications, even the reflective calls themselves were again called via reflection to produce a multistage obfuscation. The example in Fig. 4 may comprise such a multi-stage obfuscation, which may be very hard for a manual analyst to understand. HARVESTER may be able to extract the called method as well as the concrete parameter values of the invocation in these cases.

HARVESTER further extracted many distinct premium-rate numbers from various known SMS trojan malware families such as "Pincer". Many numbers can be found in multiple samples, making them good candidates for blacklisting. Furthermore, some SMS trojans store the number of messages sent in SharedPreferences, a key-value storage provided by the Android framework. HARVESTER may find many keys like "SENDED SMS COUNTER KEY" or "sendCount" used for this purpose. Some samples may even use keys like "cost" for storing the total amount of money stolen so far. Based on these values, a malware may decide when the next premium-rate SMS message is sent. Harvester also found applications that contact a command-and-control (C&C) server via SMS with commands such as "40659+3079+4128302+x+a", or "3079+4128302+x+a". Since the same commands may reappear in a number samples, they might also be used for blacklisting.

HARVESTER may also be able to extract the concrete Uniform Resource Locators (URLs) of Hypertext Transfer Protocol (HTTP) requests sent by applications. These URLs may give hints as to whether an application is malicious or not. Harvester may extract not only connections to advertisement servers, but also many well-known C&C server URLs. Furthermore, it may also extracts many interesting phone-local URIs for accessing content providers, such as "content://sms", "content://mms" or "tel://<number>" which may be used by malware for reading SMS/MMS messages or initiating phone calls without user awareness.

HARVESTER may also be used to extract runtime values for command-executing API methods such as Runtime.exec(). Applications containing su and chmod commands may be considered likely to be root exploits. HARVESTER may detect such commands even in the case of obfuscation.

Some benign applications may encrypt sensitive data such as chat conversations, or credit card information, before storing it locally on the phone. This encryption, however, may be rendered useless if the same hard-coded symmetric key is used for all installations of the app, such as, for example WhatsApp, of which HARVESTER extracted the encryption key by obtaining the values passed to the constructor of the SecretKeySpec class.

In further analysis, it was shown, that the runtime information, and/or the evaluated set of instructions, such as the results of HARVESTER, may improve the results of other tools. Comparing the recall of the FlowDroid static data flow tracker on real-world malware applications before and after injecting runtime values for reflective method calls with HARVESTER. On the original obfuscated sample, FlowDroid detected only 9 distinct leaks. After using HARVESTER with the option of replacing reflective calls with their respective actual callees, FlowDroid detected 26 privacy leaks, almost three times as many as before. These 26 leaks included stealing the IMEI or phone number via SMS, which was obfuscated through reflection.

Dynamic tools may often suffer from limited code coverage if an application depends on user inputs. With the code slices extracted by HARVESTER, dynamic tools may directly execute the code of interest, regardless of its original position in the original program. No user interaction with the application might be required, eliminating code coverage issues with existing input generation approaches.

To evaluate how HARVESTER may improve the precision and recall of existing tools on obfuscated applications, FlowDroid and TaintDroid were tested on ten randomly-picked applications from DroidBench, which were obfuscated using DexGuard. All API method calls were replaced with reflective calls on encrypted strings. Results show that FlowDroid was initially not able to detect any leak in the obfuscated apps. After deobfuscating the apps with HARVESTER through runtime-value injection, FlowDroid found the same leaks as in the unobfuscated original version.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for evaluating runtime information of an extracted set of instructions based on at least a part of a computer program, the extracted set of instructions being extracted from an original set of program instructions of the computer program, the apparatus comprising
an interface (12) to obtain information related to the extracted set of instructions and information related to one or more logging points, a logging point being a combination of a variable of interest and an instruction at which it is of interest, wherein the information related to the extracted set of instructions is based on the original set of program instructions and based on the one or more logging points;
an evaluation module (14) to provide the runtime information, based on the information related to the extracted set of instructions and the information related to the logging points, by at least partly executing one or more subsets of program instructions comprised in the extracted set of instructions,
wherein the runtime information corresponds to information related to instructions, parameters and/or variables comprised in the original set of program instructions and related to the one or more logging points, wherein the instructions, parameters, variables, and/or return values contained in the instructions of the original set of program instructions are replaced with runtime instructions, runtime parameters, runtime variables and/or runtime return values within the runtime information; and
an integration module (18) to provide an evaluated set of instructions, based on the original set of program instructions and the runtime information, the evaluated set of instructions corresponding to a set of instructions with a functionality equivalent to the original set of instructions, wherein at least some of the variables and/or instructions of the original set of program instructions have been replaced by runtime values, to facilitate further analysis of the computer program.

2. The apparatus (10) of claim 1 further comprising an extraction module (16), to provide the information related to the extracted set of instructions, based on the original set of program instructions, and the information related to the one or more logging points.

3. The apparatus (10) of claim 2, wherein the extraction module (16) is configured to provide the information related to the extracted set of instructions, based on the original set of program instructions, wherein the extraction module is configured to determine at least one instruction in the original set of program instructions accessing one or more runtime values, and wherein the one or more runtime values are based on the information related to the one or more logging points, and wherein the extraction module is configured to extract the extracted set of instructions from the original set of program instructions relating to the accessing of the one or more runtime values.

4. The apparatus (10) of claim 2, wherein the original set of program instructions comprises one or more execution sequences, and wherein the information related to the extracted set of instructions comprises differing execution sequences based on the one or more execution sequences of the original set of program instructions, and/or wherein the extracted set of instructions are based on subsets of the one or more execution sequences.

5. The apparatus (10) of claim 1, wherein the extracted set of instructions comprises instructions to calculate and/or access one or more data values and/or runtime information related to at least one of the one or more logging points.

6. The apparatus (10) of claim 2, wherein the extraction module (16) is configured to provide the information related to the extracted set of instructions based on program slices for the original set of program instructions, wherein the instructions comprised in the extracted set of instructions manipulate and/or access at least one data value related to the one or more logging points.

7. The apparatus (10) of claim 1, wherein the original set of program instructions is based on a program code or a bytecode for a virtual machine, or wherein the original set of program instructions is based on a software application bundle, an Android Application Package (APK), a Java Archive (JAR), or an iOS application.

8. The apparatus (10) of claim 1, wherein the integration module (18) is configured to resolve reflection calls to direct calls, resolve variables, resolve parameters, annotate intents, and/or resolve obfuscation transformations for the evaluated set of instructions, based on the runtime information.

9. The apparatus (10) of claim 1, wherein the evaluation module (14) is further configured to provide information related to one or more program slices of the original set of program instructions, based on the information related to the extracted set of instructions.

10. A system comprising the apparatus (10) for evaluating runtime information of an extracted set of instructions based on at least a part of a computer program of claim 1 and an apparatus (20) for providing information related to runtime information, based on information related to an extracted set of instructions and information related to one or more logging points, wherein the information related to the extracted set of instructions is based on an original set of program instructions and based on the one or more logging points, a logging point being a combination of a variable of interest and an instruction at which it is of interest, the apparatus (20) comprising
an input (22) to obtain the information related to the extracted set of instructions and the information related to the one or more logging points from the apparatus (10) for evaluating runtime information;
a computation module (24) to determine the information related to the runtime information, based on the information related to the extracted set of instructions and the information related to the one or more logging points; and
an output (26) to provide the information related to the runtime information to the apparatus (10) for evaluating runtime information, wherein the runtime information corresponds to information related to instructions, parameters and/or variables comprised in the original set of program instructions and related to the one or more logging points, wherein the instructions, parameters, variables, and/or return values contained in the instructions of the original set of program instructions are replaced with runtime instructions, runtime parameters, runtime variables and/or runtime return values within the runtime information.

11. A system comprising the apparatus (10) for evaluating runtime information of an extracted set of instructions based on at least a part of a computer program of claim 1 and an apparatus (30) for providing information related to code properties, based on an original set of program instructions of a computer program, the apparatus (30) comprising
an output (32) to provide information related to the original set of program instructions for the apparatus (10) for evaluating the runtime information;
an input (34) to obtain the runtime information from the apparatus (10) for evaluating the runtime information,;
an evaluation module (36) to provide the information related to code properties, based on the runtime information, the information related to the code properties comprising one of information related to indications that the original set of program instructions comprises malware, information related to external subroutines called by the original set of program instructions, information related to data sources used by the original set of program instructions, and information related to data transmitted by the original set of program instructions.

12. A method for evaluating runtime information of an extracted set of instructions based on at least a part of a computer program, the extracted set of instructions being extracted from an original set of program instructions of the computer program, the method comprising
obtaining (42) information related to the extracted set of instructions and information related to one or more logging points, a logging point being a combination of a variable of interest and an instruction at which it is of interest, wherein the information related to the extracted set of instructions is based on the original set of program instructions and based on the one or more logging points; and
providing (44) the runtime information, based on the information related to the extracted set of instructions and the information related to the logging points, by at least partly executing one or more subsets of program instructions comprised in the extracted set of instructions,
wherein the runtime information corresponds to information related to instructions, parameters and/or variables comprised in the original set of program instructions and related to the one or more logging points, wherein the instructions, parameters, variables, and/or return values contained in the instructions of the original set of program instructions are replaced with runtime instructions, runtime parameters, runtime variables and/or runtime return values within the runtime information, and
providing an evaluated set of instructions, based on the original set of program instructions and the runtime information, the evaluated set of instructions corresponding to a set of instructions with a functionality equivalent to the original set of instructions, wherein at least some of the variables and/or instructions of the original set of program instructions have been replaced by runtime values, to facilitate further analysis of the computer program.

13. A computer program having a program code for performing the method of claim 12 when the computer program is executed on a computer, a processor, or a programmable hardware component.

## Patentansprüche

1. Eine Vorrichtung (10) zum Auswerten von Laufzeitinformationen eines extrahierten Satzes von Anweisungen basierend auf zumindest einem Teil eines Computerprogramms, wobei der extrahierte Satz von Anweisungen aus einem ursprünglichen Satz von Programmanweisungen des Computerprogramms extrahiert wird, die Vorrichtung umfassend
eine Schnittstelle (12) zum Erhalten von Informationen in Bezug auf den extrahierten Satz von Anweisungen und Informationen in Bezug auf einen oder mehrere Protokollierungspunkte, wobei ein Protokollierungspunkt eine Kombination aus einer interessierenden Variablen und einer Anweisung ist, bei der sie von Interesse ist, wobei die Informationen in Bezug auf den extrahierten Satz von Anweisungen auf dem ursprünglichen Satz von Programmanweisungen basieren und auf dem einen oder den mehreren Protokollierungspunkten basieren;
ein Auswertemodul (14) zum Bereitstellen der Laufzeitinformationen basierend auf den Informationen in Bezug auf den extrahierten Satz von Anweisungen und den Informationen in Bezug auf die Protokollierungspunkte, indem zumindest teilweise ein oder mehrere Teilsätze von Programmanweisungen ausgeführt werden, die in dem extrahierten Satz von Anweisungen umfasst sind,
wobei die Laufzeitinformationen Informationen in Bezug auf Anweisungen, Parameter und/oder Variablen, die in dem ursprünglichen Satz von Programmanweisungen umfasst sind, und in Bezug auf den einen oder die mehreren Protokollierungspunkte entsprechen, wobei die Anweisungen, Parameter, Variablen und/oder Rückgabewerte, die in den Anweisungen des ursprünglichen Satzes von Programmanweisungen umfasst sind, durch Laufzeitanweisungen, Laufzeitparameter, Laufzeitvariablen und/oder Laufzeitrückgabewerte innerhalb der Laufzeitinformationen ersetzt werden; und
ein Integrationsmodul (18) zum Bereitstellen eines ausgewerteten Satzes von Anweisungen basierend auf dem ursprünglichen Satz von Programmanweisungen und den Laufzeitinformationen, wobei der ausgewertete Satz von Anweisungen einem Satz von Anweisungen mit einer dem ursprünglichen Satz von Anweisungen äquivalenten Funktionalität entspricht, wobei zumindest einige der Variablen und/oder Anweisungen des ursprünglichen Satzes von Programmanweisungen durch Laufzeitwerte ersetzt wurden, um die weitere Analyse des Computerprogramms zu erleichtern.

2. Die Vorrichtung (10) gemäß Anspruch 1, ferner umfassend ein Extraktionsmodul (16), um die Informationen in Bezug auf den extrahierten Satz von Anweisungen basierend auf dem ursprünglichen Satz von Programmanweisungen und die Informationen in Bezug auf den einen oder die mehreren Protokollierungspunkte bereitzustellen.

3. Die Vorrichtung (10) gemäß Anspruch 2, wobei das Extraktionsmodul (16) ausgebildet ist, die Informationen in Bezug auf den extrahierten Satz von Anweisungen basierend auf dem ursprünglichen Satz von Programmanweisungen bereitzustellen, wobei das Extraktionsmodul ausgebildet ist, zumindest eine Anweisung in dem ursprünglichen Satz von Programmanweisungen zu bestimmen, die auf einen oder mehrere Laufzeitwerte zugreifen, und wobei der eine oder die mehreren Laufzeitwerte auf den Informationen in Bezug auf den einen oder die mehreren Protokollierungspunkte basieren, und wobei das Extraktionsmodul ausgebildet ist, den extrahierten Satz von Anweisungen aus dem ursprünglichen Satz von Programmanweisungen in Bezug auf den Zugriff auf den einen oder die mehreren Laufzeitwerte zu extrahieren.

4. Die Vorrichtung (10) gemäß Anspruch 2, wobei der ursprüngliche Satz von Programmanweisungen eine oder mehrere Ausführungssequenzen umfasst, und wobei die Informationen in Bezug auf den extrahierten Satz von Anweisungen unterschiedliche Ausführungssequenzen umfassen, die auf der einen oder den mehreren Ausführungssequenzen des ursprünglichen Satzes von Programmanweisungen basieren, und/oder wobei der extrahierte Satz von Anweisungen auf Teilsätzen der einen oder der mehreren Ausführungssequenzen basiert.

5. Die Vorrichtung (10) gemäß Anspruch 1, wobei der extrahierte Satz von Anweisungen zur Berechnung und/oder zum Zugriff auf einen oder mehrere Datenwerte und/oder Laufzeitinformationen in Bezug auf zumindest einen von dem einen oder den mehreren Protokollierungspunkten umfasst.

6. Die Vorrichtung (10) gemäß Anspruch 2, wobei das Extraktionsmodul (16) ausgebildet ist, die Informationen in Bezug auf den extrahierten Satz von Anweisungen basierend auf Programmabschnitten für den ursprünglichen Satz von Programmanweisungen bereitzustellen, wobei die Anweisungen, die in dem extrahierten Satz von Anweisungen umfasst sind, zumindest einen Datenwert in Bezug auf den einen oder die mehreren Protokollierungspunkte manipulieren und/oder darauf zugreifen.

7. Die Vorrichtung (10) gemäß Anspruch 1, wobei der ursprüngliche Satz von Programmanweisungen auf einem Programmcode oder einem Bytecode für eine virtuelle Maschine basiert, oder wobei der ursprüngliche Satz von Programmanweisungen auf einem Softwareanwendungsbündel, einem Android-Anwendungspaket (APK), einem Java-Archiv (JAR) oder einer iOS-Anwendung basiert.

8. Die Vorrichtung (10) gemäß Anspruch 1, wobei das Integrationsmodul (18) ausgebildet ist, basierend auf den Laufzeitinformationen Reflexionsaufrufe in direkte Aufrufe aufzulösen, Variablen aufzulösen, Parameter aufzulösen, Intents zu annotieren und/oder Verschleierungstransformationen für den ausgewerteten Satz von Anweisungen aufzulösen.

9. Die Vorrichtung (10) gemäß Anspruch 1, wobei das Auswertemodul (14) ferner ausgebildet ist, basierend auf den Informationen in Bezug auf den extrahierten Satz von Anweisungen Informationen in Bezug auf einen oder mehrere Programmabschnitte des ursprünglichen Satzes von Programmanweisungen bereitzustellen.

10. Ein System, umfassend die Vorrichtung (10) zum Auswerten von Laufzeitinformationen eines extrahierten Satzes von Anweisungen basierend auf zumindest einem Teil eines Computerprogramms gemäß Anspruch 1 und eine Vorrichtung (20) zum Bereitstellen von Informationen in Bezug auf Laufzeitinformationen basierend auf Informationen in Bezug auf einen extrahierten Satz von Anweisungen und Informationen in Bezug auf einen oder mehrere Protokollierungspunkte, wobei die Informationen in Bezug auf den extrahierten Satz von Anweisungen auf einem ursprünglichen Satz von Programmanweisungen basieren und auf dem einen oder den mehreren Protokollierungspunkten basieren, wobei ein Protokollierungspunkt eine Kombination aus einer interessierenden Variablen und einer Anweisung ist, bei der sie von Interesse ist, die Vorrichtung (20) umfassend
einen Eingang (22) zum Erhalten der Informationen in Bezug auf den extrahierten Satz von Anweisungen und der Informationen in Bezug auf den einen oder die mehreren Protokollierungspunkte von der Vorrichtung (10), um Laufzeitinformationen auszuwerten;
ein Berechnungsmodul (24) zum Bestimmen der Informationen in Bezug auf die Laufzeitinformationen basierend auf den Informationen in Bezug auf den extrahierten Satz von Anweisungen und den Informationen in Bezug auf den einen oder die mehreren Protokollierungspunkte; und
einen Ausgang (26) zum Bereitstellen der Informationen in Bezug auf die Laufzeitinformationen an die Vorrichtung (10) zum Auswerten von Laufzeitinformationen, wobei die Laufzeitinformationen Informationen in Bezug auf Anweisungen, Parameter und/oder Variablen, die in dem ursprünglichen Satz von Programmanweisungen umfasst sind, und in Bezug auf den einen oder die mehreren Protokollierungspunkte entsprechen, wobei die Anweisungen, Parameter, Variablen und/oder Rückgabewerte, die in den Anweisungen des ursprünglichen Satzes von Programmanweisungen umfasst sind, durch Laufzeitanweisungen, Laufzeitparameter, Laufzeitvariablen und/oder Laufzeitrückgabewerte innerhalb der Laufzeitinformationen ersetzt werden.

11. Ein System, umfassend die Vorrichtung (10) zum Auswerten von Laufzeitinformationen eines extrahierten Satzes von Anweisungen basierend auf zumindest einem Teil eines Computerprogramms gemäß Anspruch 1 und eine Vorrichtung (30) zum Bereitstellen von Informationen in Bezug auf Codeeigenschaften basierend auf einem ursprünglichen Satz von Programmanweisungen eines Computerprogramms, die Vorrichtung (30) umfassend
einen Ausgang (32) zum Bereitstellen von Informationen in Bezug auf den ursprünglichen Satz von Programmanweisungen für die Vorrichtung (10) zum Auswerten der Laufzeitinformationen;
einen Eingang (34) zum Erhalten der Laufzeitinformationen von der Vorrichtung (10) zum Auswerten der Laufzeitinformationen,;
ein Auswertemodul (36) zum Bereitstellen der Informationen in Bezug auf Codeeigenschaften basierend auf den Laufzeitinformationen, wobei die Informationen in Bezug auf die Codeeigenschaften eines umfassen von Informationen in Bezug auf Hinweise darauf, dass der ursprüngliche Satz von Programmanweisungen Malware umfasst, Informationen in Bezug auf externe Teilroutinen, die von dem ursprünglichen Satz von Programmanweisungen aufgerufen werden, Informationen in Bezug auf Datenquellen, die von dem ursprünglichen Satz von Programmanweisungen verwendet werden, und Informationen in Bezug auf Daten, die von dem ursprünglichen Satz von Programmanweisungen übertragen werden.

12. Ein Verfahren zum Auswerten von Laufzeitinformationen eines extrahierten Satzes von Anweisungen basierend auf zumindest einem Teil eines Computerprogramms, wobei der extrahierte Satz von Anweisungen aus einem ursprünglichen Satz von Programmanweisungen des Computerprogramms extrahiert wird, das Verfahren umfassend
Erhalten (42) von Informationen in Bezug auf den extrahierten Satz von Anweisungen und von Informationen in Bezug auf einen oder mehrere Protokollierungspunkte, wobei ein Protokollierungspunkt eine Kombination aus einer interessierenden Variablen und einer Anweisung ist, bei der sie von Interesse ist, wobei die Informationen in Bezug auf den extrahierten Satz von Anweisungen auf dem ursprünglichen Satz von Programmanweisungen basieren und auf dem einen oder den mehreren Protokollierungspunkten basieren; und
Bereitstellen (44) der Laufzeitinformationen basierend auf den Informationen in Bezug auf den extrahierten Satz von Anweisungen und den Informationen in Bezug auf die Protokollierungspunkte, indem ein oder mehrere Teilsätze von Programmanweisungen zumindest teilweise ausgeführt werden, die in dem extrahierten Satz von Anweisungen umfasst sind,
wobei die Laufzeitinformationen Informationen in Bezug auf Anweisungen, Parameter und/oder Variablen, die in dem ursprünglichen Satz von Programmanweisungen umfasst sind, und in Bezug auf den einen oder die mehreren Protokollierungspunkte entsprechen, wobei die Anweisungen, Parameter, Variablen und/oder Rückgabewerte, die in den Anweisungen des ursprünglichen Satzes von Programmanweisungen umfasst sind, durch Laufzeitanweisungen, Laufzeitparameter, Laufzeitvariablen und/oder Laufzeitrückgabewerte innerhalb der Laufzeitinformationen ersetzt werden, und Bereitstellen eines ausgewerteten Satzes von Anweisungen basierend auf dem ursprünglichen Satz von Programmanweisungen und den Laufzeitinformationen, wobei der ausgewertete Satz von Anweisungen einem Satz von Anweisungen mit einer dem ursprünglichen Satz von Anweisungen äquivalenten Funktionalität entspricht, wobei zumindest einige der Variablen und/oder Anweisungen des ursprünglichen Satzes von Programmanweisungen durch Laufzeitwerte ersetzt wurden, um die weitere Analyse des Computerprogramms zu erleichtern.

13. Ein Computerprogramm mit einem Programmcode zum Ausführen des Verfahrens gemäß Anspruch 12, wenn das Computerprogramm auf einem Computer, einem Prozessor oder einer programmierbaren Hardwarekomponente ausgeführt wird.

## Revendications

1. Un appareil (10) pour évaluer des informations de temps d'exécution d'un ensemble extrait d'instructions sur la base d'au moins une partie d'un programme d'ordinateur, l'ensemble extrait d'instructions étant extrait d'un ensemble original d'instructions de programme du programme d'ordinateur, l'appareil comprenant
une interface (12) pour obtenir des informations relatives à l'ensemble extrait d'instructions et des informations relatives à un ou plusieurs points d'enregistrement, un point d'enregistrement étant une combinaison d'une variable d'intérêt et d'une instruction à laquelle elle est d'intérêt, les informations relatives à l'ensemble extrait d'instructions étant basées sur l'ensemble original d'instructions de programme et sur le ou les points d'enregistrement ;
un module d'évaluation (14) pour fournir les informations de temps d'exécution, sur la base des informations relatives à l'ensemble extrait d'instructions et des informations relatives aux points d'enregistrement, en exécutant au moins partiellement un ou plusieurs sous-ensembles d'instructions de programme compris dans l'ensemble extrait d'instructions,
les informations de temps d'exécution correspondant à des informations relatives à des instructions, paramètres et/ou variables comprises dans l'ensemble original d'instructions de programme et relatives au ou aux points d'enregistrement, les instructions, les paramètres, les variables et/ou les valeurs de retour compris dans les instructions de l'ensemble original d'instructions de programme étant remplacés par des instructions de temps d'exécution, des paramètres de temps d'exécution, des variables de temps d'exécution et/ou des valeurs de retour de temps d'exécution dans les informations de temps d'exécution; et
un module d'intégration (18) pour fournir un ensemble évalué d'instructions, sur la base de l'ensemble original d'instructions de programme et des informations de temps d'exécution, l'ensemble évalué d'instructions correspondant à un ensemble d'instructions avec une fonctionnalité équivalente à l'ensemble original d'instructions, dans lequel au moins certaines des variables et/ou instructions de l'ensemble original d'instructions de programme ont été remplacées par des valeurs de temps d'exécution, pour faciliter une analyse supplémentaire du programme d'ordinateur.

2. Appareil (10) selon la revendication 1, comprenant en outre un module d'extraction (16) pour fournir les informations relatives à l'ensemble extrait d'instructions, sur la base de l'ensemble original d'instructions de programme, et les informations relatives au ou aux points d'enregistrement.

3. Appareil (10) selon la revendication 2, le module d'extraction (16) étant configuré pour fournir les informations relatives à l'ensemble extrait d'instructions, sur la base de l'ensemble original d'instructions de programme, le module d'extraction étant configuré pour déterminer au moins une instruction dans l'ensemble original d'instructions de programme accédant à une ou plusieurs valeurs de temps d'exécution, et la ou les valeurs de temps d'exécution étant basées sur les informations relatives au ou aux points d'enregistrement, et le module d'extraction étant configuré pour extraire l'ensemble extrait d'instructions de l'ensemble original d'instructions de programme concernant l'accès à la ou les valeurs de temps d'exécution.

4. Appareil (10) selon la revendication 2, l'ensemble original d'instructions de programme comprenant une ou plusieurs séquences d'exécution, et les informations relatives à l'ensemble extrait d'instructions comprenant des séquences d'exécution différentes basées sur la ou les séquences d'exécution de l'ensemble original d'instructions de programme, et/ou l'ensemble extrait d'instructions étant basé sur des sous-ensembles de la ou des séquences d'exécution.

5. Appareil (10) selon la revendication 1, l'ensemble extrait d'instructions comprenant des instructions pour calculer et/ou accéder à une ou plusieurs valeurs de données et/ou informations de temps d'exécution relatives à au moins l'un du ou des points d'enregistrement.

6. Appareil (10) selon la revendication 2, le module d'extraction (16) étant configuré pour fournir les informations relatives à l'ensemble extrait d'instructions sur la base de tranches de programme pour l'ensemble original d'instructions de programme, les instructions comprises dans l'ensemble extrait d'instructions manipulant et/ou accédant à au moins une valeur de données relative au ou aux points d'enregistrement.

7. Appareil (10) selon la revendication 1, l'ensemble original d'instructions de programme étant basé sur un code de programme ou un bytecode pour une machine virtuelle, ou l'ensemble original d'instructions de programme étant basé sur un faisceau d'applications logicielles, un paquet d'applications Android (APK), une archive Java (JAR), ou une application iOS.

8. Appareil (10) selon la revendication 1, le module d'intégration (18) étant configuré pour résoudre des appels de réflexion en appels directs, résoudre des variables, résoudre des paramètres, annoter des intentions, et/ou résoudre des transformations d'obscurcissement pour l'ensemble évalué d'instructions sur la base des informations de temps d'exécution.

9. Appareil (10) selon la revendication 1, le module d'évaluation (14) étant en outre configuré pour fournir des informations relatives à une ou plusieurs tranches de programme de l'ensemble original d'instructions de programme sur la base des informations relatives à l'ensemble extrait d'instructions.

10. Système comprenant l'appareil (10) pour évaluer des informations de temps d'exécution d'un ensemble extrait d'instructions sur la base d'au moins une partie d'un programme d'ordinateur selon la revendication 1 et un appareil (20) pour fournir des informations relatives à des informations de temps d'exécution, sur la base des informations relatives à un ensemble extrait d'instructions et des informations relatives à un ou plusieurs points d'enregistrement, les informations relatives à l'ensemble extrait d'instructions étant basées sur un ensemble original d'instructions de programme et étant basées sur le ou les points d'enregistrement, un point d'enregistrement étant une combinaison d'une variable d'intérêt et d'une instruction à laquelle elle est d'intérêt, l'appareil (20) comprenant
une entrée (22) pour obtenir les informations relatives à l'ensemble extrait d'instructions et les informations relatives au ou aux points d'enregistrement de l'appareil (10) pour évaluer les informations de temps d'exécution ;
un module de calcul (24) pour déterminer les informations relatives aux informations de temps d'exécution sur la base des informations relatives à l'ensemble extrait d'instructions et des informations relatives au ou aux points d'enregistrement ; et
une sortie (26) pour fournir les informations relatives aux informations de temps d'exécution à l'appareil (10) pour évaluer les informations de temps d'exécution, les informations de temps d'exécution correspondant à des informations relatives à des instructions, paramètres et/ou variables compris dans l'ensemble original d'instructions de programme et relatives au ou aux points d'enregistrement, les instructions, les paramètres, les variables et/ou les valeurs de retour compris dans les instructions de l'ensemble original d'instructions de programme étant remplacés par des instructions de temps d'exécution, des paramètres de temps d'exécution, des variables de temps d'exécution et/ou des valeurs de retour de temps d'exécution dans les informations de temps d'exécution.

11. Système comprenant l'appareil (10) pour évaluer des informations de temps d'exécution d'un ensemble extrait d'instructions sur la base d'au moins une partie d'un programme d'ordinateur selon la revendication 1 et un appareil (30) pour fournir des informations relatives à des propriétés de code, sur la base d'un ensemble original d'instructions de programme d'un programme d'ordinateur, l'appareil (30) comprenant une sortie (32) pour fournir des informations relatives à l'ensemble original d'instructions de programme pour l'appareil (10) pour évaluer les informations de temps d'exécution ;
une entrée (34) pour obtenir les informations de temps d'exécution de l'appareil (10) pour évaluer les informations de temps d'exécution, ;
un module d'évaluation (36) pour fournir les informations relatives à des propriétés de code, sur la base des informations de temps d'exécution, les informations relatives aux propriétés de code comprenant l'une des informations relatives à des indications selon lesquelles l'ensemble original d'instructions de programme comprend des logiciels malveillants, des informations relatives aux sous-routines externes appelés par l'ensemble original d'instructions de programme, des informations relatives à des sources de données utilisées par l'ensemble original d'instructions de programme, et des informations relatives à des données transmises par l'ensemble original d'instructions de programme.

12. Procédé pour évaluer des informations de temps d'exécution d'un ensemble extrait d'instructions sur la base d'au moins une partie d'un programme d'ordinateur, l'ensemble extrait d'instructions étant extrait d'un ensemble original d'instructions de programme du programme d'ordinateur, le procédé comprenant
obtenir (42) des informations relatives à l'ensemble extrait d'instructions et des informations relatives à un ou plusieurs points d'enregistrement, un point d'enregistrement étant une combinaison d'une variable d'intérêt et d'une instruction à laquelle elle est d'intérêt, les informations relatives à l'ensemble extrait d'instructions étant basées sur l'ensemble original d'instructions de programme et sur le ou les points d'enregistrement ; et
fournir (44) les informations de temps d'exécution sur la base des informations relatives à l'ensemble extrait d'instructions et des informations relatives aux points d'enregistrement, en exécutant au moins partiellement un ou plusieurs sous-ensembles d'instructions de programme compris dans l'ensemble extrait d'instructions,
les informations de temps d'exécution correspondant à des informations relatives à des instructions, paramètres et/ou variables comprises dans l'ensemble original d'instructions de programme et relatives au ou aux points d'enregistrement, les instructions, les paramètres, les variables et/ou les valeurs de retour compris dans les instructions de l'ensemble original d'instructions de programme étant remplacés par des instructions de temps d'exécution, des paramètres de temps d'exécution, des variables de temps d'exécution et/ou des valeurs de retour de temps d'exécution dans les informations de temps d'exécution, et
fournir un ensemble évalué d'instructions, sur la base de l'ensemble original d'instructions de programme et des informations de temps d'exécution, l'ensemble évalué d'instructions correspondant à un ensemble d'instructions avec une fonctionnalité équivalente à l'ensemble original d'instructions, dans lequel au moins certaines des variables et/ou instructions de l'ensemble original d'instructions de programme ont été remplacées par des valeurs de temps d'exécution, pour faciliter une analyse supplémentaire du programme d'ordinateur.

13. Programme d'ordinateur présentant un code de programme pour effectuer le procédé selon la revendication 12 lorsque le programme d'ordinateur est exécuté sur un ordinateur, un processeur ou un composant matériel programmable.
